# EUROPEAN PATENT SPECIFICATION

(11) **EP 2 164 883 B1**
(45) Date of publication and mention of the grant of the patent: **25.09.2013**
(21) Application number: 08781293.9
(22) Date of filing: 02.07.2008
(51) Int. Cl.: C08F 251/00, A61L 15/16, C08L 51/02, C03C 25/34

(54) **HYDROXYMONOCARBOXYLIC ACID-BASED MAILLARD BINDER**
AUF HYDROXYMONOCARBONSÄURE BASIERENDES MAILLARD-BINDEMITTEL
LIANT MAILLARD À BASE D'ACIDE HYDROXYMONOCARBOXYLIQUE

(30) Priority: 05.07.2007 US 948098 P
(43) Date of publication of application: 24.03.2010
(73) Proprietor: Knauf Insulation, 4600 Visé (BE)
(72) Inventor: SWIFT, Brian, Lee, Oxford, GA 30054 (US)
(74) Representative: Farmer, Guy Dominic
(86) International application number: PCT/US2008/069046
(87) International publication number: WO 2009/006532

(56) References cited:
- WO-A1-99/60043
- JP-A- 2000 327 841
- US-A- 5 807 364
- US-A- 5 807 364
- US-A1- 2005 202 224
- US-A1- 2007 027 283
- US-A1- 2007 123 679
- US-A1- 2007 123 679

## Description

### CROSS REFERENCE TO RELATED APPLICATION

This application claims priority to U.S. Provisional Patent Application Serial No. 60/948,098 filed on July 5, 2007, the entire disclosure of which is hereby incorporated by reference.

### BACKGROUND

Binders are useful in fabricating materials from non-assembled or loosely-assembled matter. For example, binders enable two or more surfaces to become united. Binders may be broadly classified into two main groups: organic and inorganic, with the organic materials being subdivided into those of animal, vegetable, and synthetic origin. Another way of classifying binders is based upon the chemical nature of these compounds: (1) protein or protein derivatives; (2) starch, cellulose, or gums and their derivatives; (3) thermoplastic synthetic resins; (4) thermosetting synthetic resins; (5) natural resins and bitumens; (6) natural and synthetic rubbers; and (7) inorganic binders. Binders also may be classified according to the purpose for which they are used: (1) bonding rigid surfaces, such as rigid plastics, and metals; and (2) bonding flexible surfaces, such as flexible plastics, and thin metallic sheets.

Thermoplastic binders comprise a variety of polymerized materials such as polyvinyl acetate, polyvinyl butyral, polyvinyl alcohol, and other polyvinyl resins; polystyrene resins; acrylic and methacrylic acid ester resins; cyanoacrylates; and various other synthetic resins such as polyisobutylene polyamides, courmaroneidene products, and silicones. Such thermoplastic binders may have permanent solubility and fusibility so that they creep under stress and soften when heated. They are used for manufacturing various products, for example, tapes.

Thermosetting binders comprise a variety of phenol-aldehyde, ureaaldehyde, melamine-aldehyde, and other condensation-polymerization materials like the furane and polyurethane resins. Thermosetting binders may be characterized by being transformed into insoluble and infusible materials by means of either heat or catalytic action. Binder compositions containing phenol-, resorcinol-, urea-, melamine-formaldehyde, phenol-furfuraldehyde, are used for the bonding of textiles, plastics, rubbers, and many other materials.

Documents US2007/0123679 and US5807364 disclose binder compositions comprising salts of hydroxy acids which may be ammonium salts, and fibers.

As indicated above, binders are useful in fabricating materials from non-assembled or loosely-assembled matter. Accordingly, compositions capable of functioning as a binder are desirable.

### SUMMARY

Cured or uncured binders in accordance with an illustrative embodiment of the present invention may comprise one or more of the following features or combinations thereof. In addition, materials in accordance with the present invention may comprise one or more of the following features or combinations thereof:
Initially it should be appreciated that the binders of the present invention may be utilized in a variety of fabrication applications to produce or promote cohesion in a collection of non-assembled or loosely-assembled matter. A collection includes two or more components. The present binders produce or promote cohesion in at least two of the components of the collection. For example, the present binders are capable of holding a collection of matter together such that the matter adheres in a manner to resist separation. The binders described herein can be utilized in the fabrication of any material.

One potential feature of the present binders is that they are formaldehyde free. Accordingly, the materials the binders are disposed upon may also be formaldehyde free (*e.g*., fiberglass). In addition, the present binders may have a reduced trimethylamine content as compared to other known binders.

With respect to the present binder's chemical constituents, they may include ester and/or polyester compounds. The binders may include ester and/or polyester compounds in combination with a vegetable oil, such as soybean oil. Furthermore, the binders may include ester and/or polyester compounds in combination with sodium salts of organic acids. The binders may include sodium salts of inorganic acids. The binders may also include potassium salts of organic acids. Moreover, the binders may include potassium salts of inorganic acids. The described binders may include ester and/or polyester compounds in combination with a clay additive, such as montmorillonite.

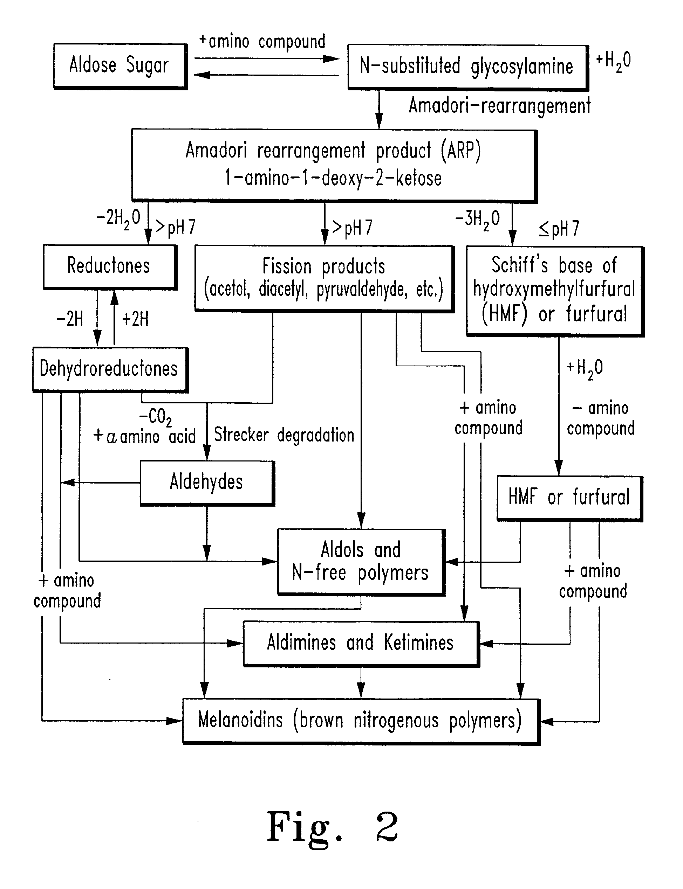

Furthermore, the binders of the present invention may include a product of a Maillard reaction. For example, see Fig. 2. As shown in Fig. 2, Maillard reactions produce melanoidins, *i.e*., high molecular weight, furan ring- and nitrogen-containing polymers that vary in structure depending on the reactants and conditions of their preparation. Melanoidins display a C:N ratio, degree of unsaturation, and chemical aromaticity that increase with temperature and time of heating. (*See*, Ames, J.M. in "The Maillard Browning Reaction - an update," Chemistry and Industry (Great Britain), 1988, 7, 558-561, the disclosure of which is hereby incorporated herein by reference). Accordingly, the present binders may be made via a Maillard reaction and thus contain melanoidins. It should be appreciated that the binders described herein may contain melanoidins, or other Maillard reaction products, which products are generated by a process other than a Maillard reaction and then simply added to the composition that makes up the binder. The melanoidins in the binder may be water-insoluble. Moreover, the binders may be thermoset binders.

The Maillard reactants to produce a melanoidin may include an amine reactant reacted with a reducing-sugar carbohydrate reactant. For example, an ammonium salt of a monohydroxy-monocarboxylic acid may be reacted with (i) a monosaccharide in its aldose or ketose form or (ii) a polysaccharide or (iii) with combinations thereof. In another variation, an ammonium salt of a monomeric polyhydroxy-monocarboxylic acid may be reacted with (i) a monosaccharide in its aldose or ketose form or (ii) a polysaccharide, or (iii) with combinations thereof. In yet another variation, an ammonium salt of a polymeric polyhydroxy-monocarboxylic acid may be reacted with (i) a monosaccharide in its aldose or ketose form or (ii) a polysaccharide, or (iii) with combinations thereof.

It should also be appreciated that the binders of the present invention may include melanoidins produced in non-sugar variants of Maillard reactions. In these reactions an amine reactant is reacted with a non-carbohydrate carbonyl reactant. In one illustrative variation, an ammonium salt of a monohydroxy-monocarboxylic acid may be reacted with a non-carbohydrate carbonyl reactant such as pyruvaldehyde, acetaldehyde, crotonaldehyde, 2-furaldehyde, quinone, ascorbic acid, or with combinations thereof. In another variation, an ammonium salt of a monomeric polyhydroxy-monocarboxylic acid may be reacted with a non-carbohydrate carbonyl reactant such as pyruvaldehyde, acetaldehyde, crotonaldehyde, 2-furaldehyde, quinone, ascorbic acid, or with combinations thereof. In yet another variation, an ammonium salt of a polymeric polyhydroxy-monocarboxylic acid may be reacted with a non-carbohydrate carbonyl reactant such as pyruvaldehyde, acetaldehyde, crotonaldehyde, 2-furaldehyde, quinone, ascorbic acid, or with combinations thereof.

The melanoidins discussed herein may be generated from melanoidin reactant compounds (*e.g*., Maillard reactants). These reactant compounds are disposed in an aqueous solution at an alkaline pH, and therefore are not corrosive. That is, the alkaline solution prevents or inhibits the eating or wearing away of a substance, such as metal, caused by chemical decomposition brought about by, for example, an acid. The reactant compounds may include a reducing-sugar carbohydrate reactant and an amine reactant. Alternatively, the reactant compounds may include a non-carbohydrate carbonyl reactant and an amine reactant.

It should also be understood that the binders described herein may be made from melanoidin reactant compounds themselves. That is, once Maillard reactants, for example, are mixed, this mixture can function as a binder of the present invention. These binders may be utilized to fabricate uncured, formaldehyde-free matter, such as fibrous materials.

In the alternative, a binder made from the reactants of a Maillard reaction may be cured. These binders may be used to fabricate cured formaldehyde-free matter, such as fibrous compositions. These compositions may be water-resistant and, as indicated above, may include water-insoluble melanoidins.

It should be appreciated that the binders described herein may be used in manufacturing products from a collection of non-assembled or loosely-assembled matter. For example, these binders may be employed to fabricate fiber products. These products may be made from woven or nonwoven fibers. The fibers can be heat-resistant or non heat-resistant fibers or combinations thereof. In one illustrative embodiment, the binders are used to bind glass fibers to make fiberglass. In another illustrative embodiment, the binders are used to make cellulosic compositions. With respect to cellulosic compositions, the binders may be used to bind cellulosic matter to fabricate, for example, wood fiber board which has desirable physical properties (*e.g*., mechanical strength).

One illustrative embodiment of the invention is directed to a method for manufacturing products from a collection of non-assembled or loosely-assembled matter. One example of using this method is in the fabrication of fiberglass. (As indicated above, this method can be utilized in the fabrication of any material, as long as the method produces or promotes cohesion when utilized.) The method may include contacting glass fibers with a thermally-curable, aqueous binder of the present invention. The binder may include (i) an ammonium salt of a monohydroxy-monocarboxylic acid reactant and (ii) a reducing-sugar carbohydrate reactant. Alternatively, the binder may include (i) an ammonium salt of a polyhydroxy-monocarboxylic acid reactant and (ii) a reducing-sugar carbohydrate reactant. Further, the binder may include (i) an ammonium salt of a monohydroxy-monocarboxylic acid reactant and (ii) a non-carbohydrate carbonyl reactant. Likewise, the binder may include (i) an ammonium salt of a polyhydroxy-monocarboxylic acid reactant and (ii) a non-carbohydrate carbonyl reactant. These two reactants ((i) and (ii)) are melanoidin reactant compounds, *i.e*., these reactants produce melanoidins when reacted under conditions to initiate a Maillard reaction or a non-sugar variant of a Maillard reaction. The method can further include removing water from the binder in contact with the glass fibers (*i.e.,* the binder is dehydrated). The method can also include curing the binder in contact with the glass fibers (*e.g*., thermally curing the binder).

Another example of utilizing this method is in the fabrication of cellulosic materials. The method may include contacting the cellulosic material (*e.g*., cellulose fibers) with a thermally-curable, aqueous binder of the present invention. The binder may include (i) an ammonium salt of a monohydroxy-monocarboxylic acid reactant and (ii) a reducing-sugar carbohydrate reactant. Alternatively, the binder may include (i) an ammonium salt of a polyhydroxy-monocarboxylic acid reactant and (ii) a reducing-sugar carbohydrate reactant. Further, the binder may include (i) an ammonium salt of a monohydroxy-monocarboxylic acid reactant and (ii) a non-carbohydrate carbonyl reactant. Likewise, the binder may include (i) an ammonium salt of a polyhydroxy-monocarboxylic acid reactant and (ii) a non-carbohydrate carbonyl reactant. As indicated above, these two reactants ((i) and (ii)) are melanoidin reactant compounds. Similarly, the method can also include removing water from the binder in contact with the cellulosic material (*i.e*., the binder is dehydrated). Further, the method can also include curing the binder in contact with the cellulosic material (*e.g*., thermally curing the binder).

One way of using the binders of the present invention is to bind glass fibers together such that they become organized into a fiberglass mat. The mat of fiberglass may be processed to form one of several types of fiberglass materials, such as fiberglass insulation. Illustratively, the fiberglass material may have glass fibers present in the range from about 75% to about 99% by weight. In one variation, the uncured binder may function to hold the glass fibers together. Alternatively, the cured binder may function to hold the glass fibers together.

In addition, a fibrous product may be produced that includes a binder of the present invention in contact with cellulose fibers, such as those in a mat of wood shavings or sawdust. The mat may be processed to form one of several types of wood fiber board products. In one variation, the binder is uncured. In this variation, the uncured binder may function to hold the cellulosic fibers together. In the alternative, the cured binder may function to hold the cellulosic fibers together.

Additional features of the present invention will become apparent to those skilled in the art upon consideration of the following detailed description of illustrative embodiments exemplifying the best mode of carrying out the invention as presently perceived.

### BRIEF DESCRIPTION OF THE DRAWINGS

Fig. 1 shows a number of illustrative reactants for producing melanoidins;
Fig. 2 illustrates a Maillard reaction schematic when reacting a reducing sugar with an amino compound; and
Fig. 3 shows an exemplary schematic that depicts one way of disposing a binder onto fibers.

### DETAILED DESCRIPTION

As used herein, the phrase "formaldehyde-free" means that a binder or a material that incorporates a binder liberates less than about 1000 parts per billion (ppb) formaldehyde as a result of drying and/or curing. In one variation, a binder or a material that incorporates a binder liberates less than about 500 ppb formaldehyde. In another variation, a binder or a material that incorporates a binder liberates less than about 100 ppb formaldehyde. In yet another variation, a binder or a material that incorporates a binder liberates less than about 50 ppb formaldehyde. In still another variation, a binder or a material that incorporates a binder liberates less than about 10 ppb formaldehyde. The ppb is based on the weight of sample being measured for formaldehyde release.

Cured indicates that the binder has been exposed to conditions so as to initiate a chemical change. Examples of these chemical changes include, but are not limited to, (i) covalent bonding, (ii) hydrogen bonding of binder components, and (iii) chemically cross-linking the polymers and/or oligomers in the binder. These changes may increase the binder's durability and/or solvent resistance as compared to the uncured binder. Curing a binder may result in the formation of a thermoset material. Furthermore, curing may include the generation of melanoidins. These melanoidins may be generated from a Maillard reaction from melanoidin reactant compounds. In addition, a cured binder may result in an increase in adhesion between the matter in a collection as compared to an uncured binder. Curing can be initiated by, for example, heat, microwave radiation, and/or conditions that initiate one or more of the chemical changes mentioned above.

In a situation where the chemical change in the binder results in the release of water, *e.g*., polymerization and cross-linking, a cure can be determined by the amount of water released above that which would occur from drying alone. The techniques used to measure the amount of water released during drying, as compared to when a binder is cured, are well known in the art.

In accordance with the above paragraph, an uncured binder is one that has not been cured.

As used herein, the term "alkaline" indicates a solution having a pH that is greater than or equal to 7. For example, the pH of the solution can be less than or equal to 10. In addition, the solution may have a pH from 7 to 10, or from 8 to 10, or from 9 to 10.

As used herein, the term "ammonium" includes, but is not limited to, ⁺NH₄, ⁺NH₃R¹, and ⁺NH₂R¹R², where R¹ and R² are each independently selected in ⁺NH₂R¹R², and where R¹ and R² are selected from alkyl, cycloalkyl, alkenyl, cycloalkenyl, heterocyclyl, aryl, and heteroaryl.

The term "alkyl" refers to a saturated monovalent chain of carbon atoms, which may be optionally branched; the term "cycloalkyl" refers to a monovalent chain of carbon atoms, a portion of which forms a ring; the term "alkenyl" refers to an unsaturated monovalent chain of carbon atoms including at least one double bond, which may be optionally branched; the term "cycloalkenyl" refers to an unsaturated monovalent chain of carbon atoms, a portion of which forms a ring; the term "heterocyclyl" refers to a monovalent chain of carbon and heteroatoms, wherein the heteroatoms are selected from nitrogen, oxygen, and sulfur, a portion of which, including at least one heteroatom, form a ring; the term "aryl" refers to an aromatic mono or polycyclic ring of carbon atoms, such as phenyl, naphthyl, and the like; and the term "heteroaryl" refers to an aromatic mono or polycyclic ring of carbon atoms and at least one heteroatom selected from nitrogen, oxygen, and sulfur, such as pyridinyl, pyrimidinyl, indolyl, benzoxazolyl. It is to be understood that each of alkyl, cycloalkyl, alkenyl, cycloalkenyl, and heterocyclyl may be optionally substituted with independently selected groups such as alkyl, haloalkyl, hydroxyalkyl, aminoalkyl, carboxylic acid and derivatives thereof, including esters, amides, and nitriles, hydroxy, alkoxy, acyloxy, amino, alkyl and dialkylamino, acylamino, thio, and combinations thereof. It is further to be understood that each of aryl and heteroaryl may be optionally substituted with one or more independently selected substituents, such as halo, hydroxy, amino, alkyl or dialkylamino, alkoxy, alkylsulfonyl, cyano, nitro.

As used herein, the term "hydroxy-monocarboxylic acid" includes monohydroxy-monocarboxylic acids and polyhydroxy-monocarboxylic acids, where the latter acids can be monomeric or polymeric. In one aspect, an hydroxy-monocarboxylic acid is sufficiently non-volatile as its ammonium salt to maximize its ability to remain available for reaction with the carbohydrate reactant of a Maillard reaction (discussed below). In another aspect, an hydroxy-monocarboxylic acid may be substituted with other chemical functional groups.

Illustratively, an hydroxy-monocarboxylic acid may be an acid, including, but not limited to an unsaturated aliphatic hydroxy-monocarboxylic acid, a saturated aliphatic hydroxy-monocarboxylic acid, an aromatic hydroxy-monocarboxylic acid, an unsaturated cyclic hydroxy-monocarboxylic acid, a saturated cyclic hydroxy-monocarboxylic acid, anhydrides thereof, and mixtures thereof.

It is appreciated that any such hydroxy-monocarboxylic acids may be optionally substituted, such as with halo, alkyl, alkoxy. In one variation, the hydroxy-monocarboxylic acid is the saturated aliphatic monohydroxy-monocarboxylic acid, glycolic acid (2-hydroxyacetic acid). Other suitable hydroxy-monocarboxylic acids are contemplated to include, but are not limited to, gluconic acid, hydroxyvaleric acid, hydroxycaproic acid, o-, m- and p-hydroxybenzoic acid, 9-hydroxystearic acid, 10-hydroxystearic acid, 12-hydroxystearic acid, 9,10-dihydroxystearic acid, 1,2-hydroxy-9-octadecanoic acid (ricinoleic acid), 3-hydroxy-2,2-dimethylpropanoic acid (hydroxypivalic acid), dimethylolpropionic acid (DMPA), 2-hydroxypropanoic acid (lactic acid), 2-methyl 2-hydroxypropanoic acid (methyllactic acid), 2-hydroxybutanoic acid, phenyl 2-hydroxyacetic acid (mandelic acid), phenyl 2-methyl 2-hydroxyacetic acid, 3-phenyl 2-hydroxypropanoic acid (phenyllactic acid), 2,3-dihydroxypropanoic acid (glyceric acid), 2,3,4-trihydroxybutanoic acid, 2,3,4,5-tetrahydroxypentanoic acid, 2,3,4,5,6-pentahydroxyhexanoic acid, 2-hydroxydodecanoic acid (alpha hydroxylauric acid), 2,3,4,5,6,7-hexahydroxyheptanoic acid, diphenyl 2-hydroxyacetic acid (benzilic acid), 4-hydroxymandelic acid, 4-chloromandelic acid, 3-hydroxybutanoic acid, 4-hydroxybutanoic acid, 2-hydroxyhexanoic acid, 5-hydroxydodecanoic acid, 12-hydroxydodecanoic acid, 10-hydroxydecanoic acid, 16-hydroxyhexadecanoic acid, 2-hydroxy-3-methylbutanoic acid, 2-hydroxy-4-methylpentanoic acid, 3-hydroxy-4-methoxymandelic acid, 4-hydroxy-3-methoxymendelic acid, 2-hydroxy-2-methylbutanoic acid, 3-(2-hydroxyphenyl) lactic acid, 3-(4-hydroxyphenyl) lactic acid, hexahydromandelic acid, 3-hydroxy-3-methylpentanoic acid, 4-hydroxydecanoic acid, 5-hydroxydecanoic acid, aleuritic acid, and carboxyl end-capped polyvinyl alchol.

As used herein, the term "amine base" includes, but is not limited to, ammonia, a primary amine, *i.e*., NH₂R¹, and a secondary amine, *i.e.,* NHR¹R², where R¹ and R² are each independently selected in NHR¹R², and where R¹ and R² are selected from alkyl, cycloalkyl, alkenyl, cycloalkenyl, heterocyclyl , aryl, and heteroaryl, as defined herein. Illustratively, the amine base may be substantially volatile or substantially non-volatile under conditions sufficient to promote formation of the thermoset binder during thermal curing. Illustratively, the amine base may be a substantially volatile base, such as ammonia, ethylamine, diethylamine, dimethylamine, ethylpropylamine, and the like. Alternatively, the amine base may be a substantially non-volatile base, such as aniline, 1-naphthylamine, 2-naphthylamine, *para*-aminophenol.

As used herein, "reducing sugar" indicates one or more sugars that contain aldehyde groups, or that can isomerize, *i.e.,* tautomerize, to contain aldehyde groups, which groups are reactive with an amino group under Maillard reaction conditions and which groups may be oxidized with, for example, Cu⁺² to afford carboxylic acids. It is also appreciated that any such carbohydrate reactant may be optionally substituted, such as with hydroxy, halo, alkyl, alkoxy. It is further appreciated that in any such carbohydrate reactant, one or more chiral centers are present, and that both possible optical isomers at each chiral center are contemplated to be included in the invention described herein. Further, it is also to be understood that various mixtures, including racemic mixtures, or other diastereomeric mixtures of the various optical isomers of any such carbohydrate reactant, as well as various geometric isomers thereof, may be used in one or more embodiments described herein.

As used herein, the term "fiberglass" indicates heat-resistant fibers suitable for withstanding elevated temperatures. Examples of such fibers include, but are not limited to, mineral fibers (*e.g*., rock fibers), aramid fibers, ceramic fibers, metal fibers, carbon fibers, polyimide fibers, certain polyester fibers, rayon fibers, mineral wool (*e.g*., glass wool or rock wool), and glass fibers. Illustratively, such fibers are substantially unaffected by exposure to temperatures above 120 °C.

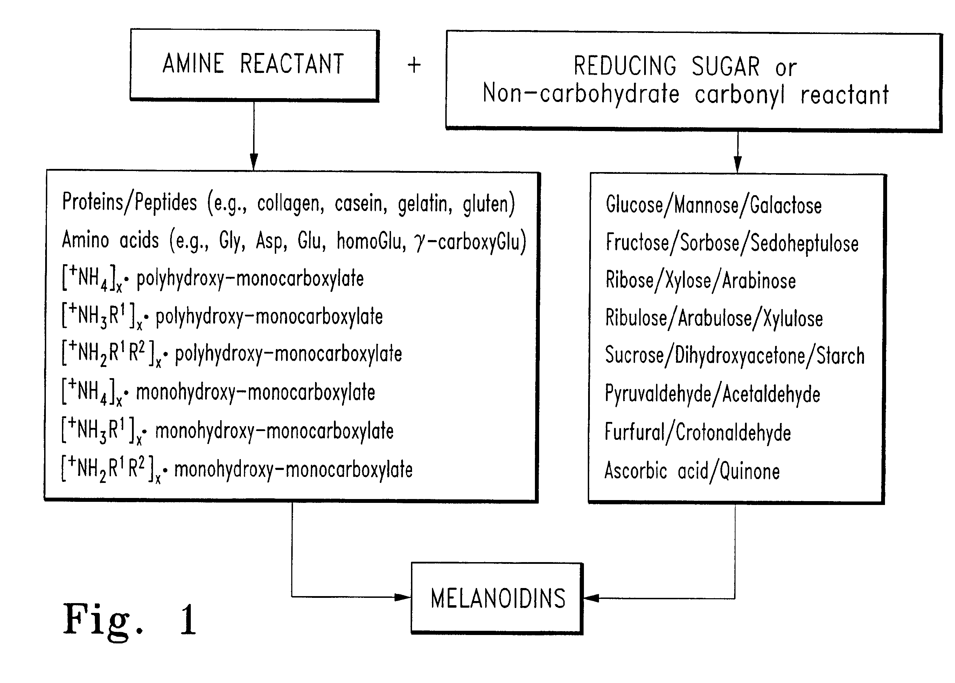

Fig. 1 shows examples of reactants for a Maillard reaction. Examples of amine reactants include proteins, peptides, amino acids, ammonium salts of polyhydroxy-monocarboxylic acids, and ammonium salts of monohydroxy-monocarboxylic acids. As illustrated, "ammonium" can be [⁺NH₄]ₓ, [⁺NH₃R¹]ₓ, and [⁺NH₂R¹R²]ₓ, where x is about 1. With respect to ⁺NH₂R¹R², R¹ and R² are each independently selected. Moreover, R¹ and R² are selected from alkyl, cycloalkyl, alkenyl, cycloalkenyl, heterocyclyl, aryl, and heteroaryl, as described above. Fig. 1 also illustrates examples of reducing-sugar reactants for producing melanoidins, including monosaccharides, in their aldose or ketose form, polysaccharides, or combinations thereof. Illustrative non-carbohydrate carbonyl reactants for producing melanoidins are also shown in Fig. 1, and include various aldehydes, *e.g*., pyruvaldehyde and furfural, as well as compounds such as ascorbic acid and quinone.

Fig. 2 shows a schematic of a Maillard reaction, which culminates in the production of melanoidins. In its initial phase, a Maillard reaction involves a carbohydrate reactant, for example, a reducing or aldose sugar (note that the carbohydrate reactant may come from a substance capable of producing a reducing sugar under Maillard reaction conditions). The reaction also involves condensing the carbohydrate reactant (*e.g*., a reducing or aldose sugar) with an amine reactant, *e.g*., an amino compound possessing an amino group. In other words, the carbohydrate reactant and the amine reactant for a Maillard reaction are the melanoidin reactant compounds. The condensation of these two reactants produces an *N*-substituted glycosylamine. For a more detailed description of the Maillard reaction see, Hodge, J.E. Chemistry of Browning Reactions in Model Systems J. Agric. Food Chem. 1953, 1, 928-943, the disclosure of which is hereby incorporated herein by reference. The compound possessing a free amino group in a Maillard reaction, which compound serves as the amine reactant, may be present in the form of an amino acid. The free amino group can also come from a protein, where the free amino groups are available in the form of, for example, the ∈-amino group of lysine residues, and/or the α-amino group of the terminal amino acid. Alternatively, as described herein, an ammonium salt of an hydroxy-monocarboxylic acid may serve as the amine reactant in a Maillard reaction.

Another aspect of conducting a Maillard reaction as described herein is that, initially, the aqueous Maillard reactant solution (which also is a binder), as described above, has an alkaline pH. However, once the solution is disposed on a collection of non-assembled or loosely-assembled matter, and curing is initiated, the pH decreases (*i.e.,* the binder becomes acidic). It should be understood that when fabricating a material, the amount of contact between the binder and components of machinery used in the fabrication is greater prior to curing (*i.e.,* when the binder solution is alkaline) as compared to after the binder is cured (*i.e*., when the binder is acidic). An alkaline composition is less corrosive than an acidic composition. Accordingly, corrosivity of the fabrication process is decreased.

It should be appreciated that by using the aqueous Maillard reactant solution described herein, the machinery used to fabricate fiberglass, for example, is not exposed to an acidic solution because, as described above, the pH of the Maillard reactant solution is alkaline. Furthermore, during the fabrication process, the only time an acidic condition develops is after the binder has been applied to glass fibers. Once the binder is applied to the glass fibers, the binder and the material that incorporates the binder have relatively infrequent contact with the components of the machinery, as compared to the time prior to applying the binder to the glass fibers. Accordingly, corrosivity of fiberglass fabrication (and the fabrication of other materials) is decreased.

Without being bound to theory, covalent reaction of the hydroxy-monocarboxylic acid ammonium salt and reducing sugar reactants of a Maillard reaction, which as described herein occurs substantially during thermal curing to produce brown-colored nitrogenous polymeric and co-polymeric melanoidins of varying structure, is thought to involve initial Maillard reaction of ammonia with the aldehyde moiety of a reducing-sugar carbohydrate reactant to afford *N*-substituted glycosylamine, as shown in Fig. 2. Consumption of ammonia in such a way, with ammonia and a reducing-sugar carbohydrate reactant combination functioning as a latent acid catalyst, would be expected to result in a decrease in pH, which decrease is believed to promote esterification processes and/or dehydration of the hydroxy-monocarboxylic acid to afford its corresponding anhydride derivative. At pH ≤ 7, the Amadori rearrangement product of *N*-substituted glycosylamine, *i.e.,* 1-amino-1-deoxy-2-ketose, would be expected to undergo mainly 1,2-enolization with the formation of furfural when, for example, pentoses are involved, or hydroxymethylfurfural when, for example, hexoses are involved, as a prelude to melanoidin production. Concurrently, contemporaneously, or sequentially with the production of melanoidins, esterification processes may occur involving melanoidins, hydroxy-monocarboxylic acid and/or its corresponding anhydride derivative, and residual carbohydrate, which processes lead to extensive cross-linking. Accompanied by sugar dehydration reactions, whereupon conjugated double bonds are produced that may undergo polymerization, a water-resistant thermoset binder is produced which is believed to consist of polyester adducts interconnected by a network of carbon-carbon single bonds.

A binder of the present invention may be applied onto a substrate such as, for example, glass fibers as they are being produced and formed into a mat. Thereafter, water is volatilized from the binder, and the resulting high-solids binder-coated fibrous glass mat may then be heated in a curing oven to cure the binder and thereby produce a finished fibrous glass batt which may be used, for example, as a thermal or acoustical insulation product, a reinforcement for a subsequently produced composite. Typically, the curing oven is operated at a temperature over a range from 148.9°C (300 °F) to 315.6°C (600 °F). Generally, the fibrous glass mat resides within the oven for a period of time from about 0.5 minute to about 3 minutes. For the manufacture of conventional thermal or acoustical insulation products, the time ranges from 0.75 minute to 1.5 minutes. Fiberglass having a cured, rigid binder matrix emerges from the oven in the form of a batt which may be compressed for packaging and shipping and which will thereafter substantially recover its as-made vertical dimension when unconstrained.

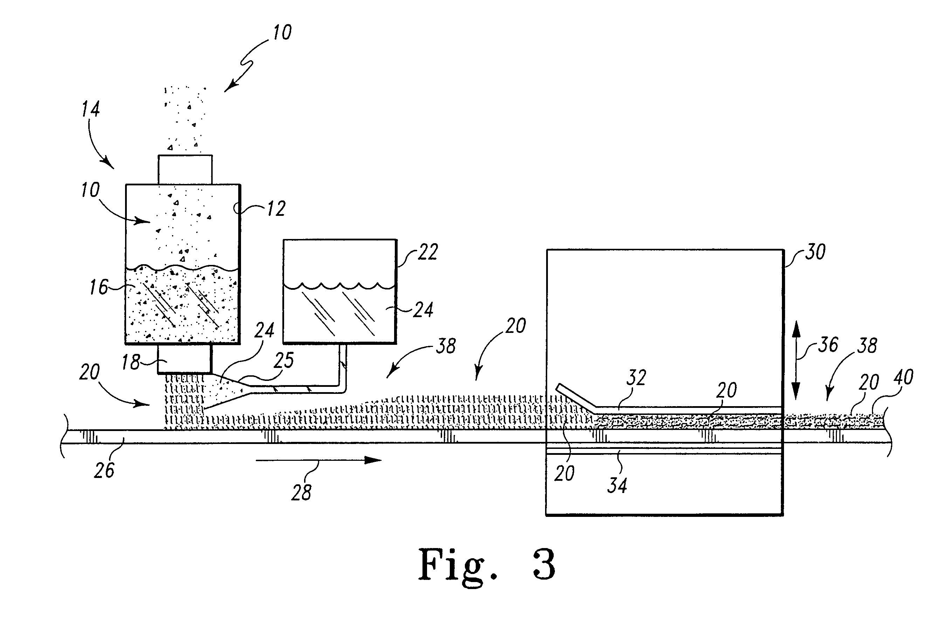

Fig. 3 is an exemplary schematic showing one embodiment of a process for disposing a binder of the present invention onto glass fibers. In particular, as shown in Fig. 3, silica (sand) particles 10 are placed in the interior 12 of a vat 14, where the particles 10 are moltenized to produce molten glass 16. Molten glass 16 is then advanced through a fiberizer 18 so as to fiberize molten glass 16 into glass fibers 20. A container 22 that contains a liquid uncured binder 24 of the present invention serves as reservoir from which liquid uncured binder 24 is disposed onto glass fibers 20 (by means of sprayer 25) as they exit fiberizer 18 so as to bind the fibers together. Glass fibers 20 are placed onto a forming chain 26 so as to form a collection 38 of glass fibers 20. The collection 38 is then advanced in the direction indicated by arrow 28, while undergoing an expansion in volume, so as to enter oven 30 where the collection is heated and curing occurs. While positioned in oven 30, collection 38 is positioned between flights 32 and 34. Flight 32 can be moved relative to flight 34 in the direction indicated by arrow 36, *i.e*., flight 32 can be positioned closer to flight 34 or moved away from flight 34 thereby adjusting the distance between flights 32 and 34. As shown in Fig. 3, flight 32 has been moved relative to flight 34 so as to exert a compressive force on collection 38 as it moves through the oven 30. Subjecting the collection 38 to a compressive force decreases the thickness of collection 38 as compared to its thickness prior to encountering flights 32 and 34. Accordingly, the density of the collection 38 is increased as compared to its density prior to encountering flights 32 and 34. As mentioned above, the collection 38 is heated in the oven 30 and curing occurs so as to produce a cured binder 40 being disposed on glass fibers 20. The curing may result in a thermoset binder material being disposed upon glass fibers 22. The collection 38 then exits oven 30 where it can be utilized in various products, *e.g*., products such as flexible duct media, acoustical board, pipe insulation, batt residential insulation, and elevated panel insulation to name a few.

The above description sets forth one example of how to adjust a process parameter to obtain one or more desirable physical/chemical characteristics of a collection bound together by a binder of the present invention, *e.g*., the thickness and density of the collection is altered as it passes through the oven. However, it should be appreciated that a number of other parameters (one or more) can also be adjusted to obtain desirable characteristics. These include the amount of binder applied onto the glass fibers, the type of silica utilized to make the glass fibers, the size of the glass fibers (*e.g*., fiber diameter, fiber length and fiber thickness) that make up a collection. What the desirable characteristic are will depend upon the type of product being manufactured, *e.g*., acoustical board, pipe insulation, batt residential insulation, and elevated panel insulation to name a few. The desirable characteristics associated with any particular product are well known in the art. With respect to what process parameters to manipulate and how they are manipulated to obtain the desirable physical/chemical characteristics, *e.g*., thermal properties and acoustical characteristics, these can be determined by routine experimentation. For example, a collection having a greater density is desirable when fabricating acoustical board as compared with the density required when fabricating residential insulation.

The following discussion is directed to (i) examples of carbohydrate and amine reactants, which reactants can be used in a Maillard reaction, (ii) how these reactants can be combined with each other and with various additives to prepare binders of the present invention, and iii) illustrative embodiments of the binders described herein used as glass fiber binders in fiberglass insulation products. It should be understood at the outset that any carbohydrate compound and any compound possessing a primary or secondary amino group, which compounds will act as reactants in a Maillard reaction, can be utilized in the binders of the present invention. Such compounds can be identified and utilized by one of ordinary skill in the art with the guidelines disclosed herein.

With respect to exemplary reactants, it should also be appreciated that an ammonium salt of an hydroxy-monocarboxylic acid is an effective amine reactant in a Maillard reaction. Ammonium salts of hydroxy-monocarboxylic acids can be generated by neutralizing the acid group with an amine base, thereby producing an hydroxy-monocarboxylic acid ammonium salt. Complete neutralization, *i.e*., about 100% calculated on an equivalents basis, may eliminate any need to titrate or partially neutralize the acid group in an hydroxy-monocarboxylic acid prior to binder formation. However, it is expected that partial neutralization would not inhibit formation of the binders of the present invention. Note that neutralization of the acid group of an hydroxy-monocarboxylic acid may be carried out either before or after the hydroxy-monocarboxylic acid is mixed with the carbohydrate.

With respect to the carbohydrate reactant, it may include one or more reactants having one or more reducing sugars. In one aspect, any carbohydrate reactant should be sufficiently nonvolatile to maximize its ability to remain available for reaction with an hydroxy-monocarboxylic acid ammonium salt reactant. The carbohydrate reactant may be a monosaccharide in its aldose or ketose form, including a triose, a tetrose, a pentose, a hexose, or a heptose; or a polysaccharide; or combinations thereof. A carbohydrate reactant may be a reducing sugar, or one that yields one or more reducing sugars *in situ* under thermal curing conditions. For example, when a triose serves as the carbohydrate reactant, or is used in combination with other reducing sugars and/or a polysaccharide, an aldotriose sugar or a ketotriose sugar may be utilized, such as glyceraldehyde and dihydroxyacetone, respectively. When a tetrose serves as the carbohydrate reactant, or is used in combination with other reducing sugars and/or a polysaccharide, aldotetrose sugars, such as erythrose and threose; and ketotetrose sugars, such as erythrulose, may be utilized. When a pentose serves as the carbohydrate reactant, or is used in combination with other reducing sugars and/or a polysaccharide, aldopentose sugars, such as ribose, arabinose, xylose, and lyxose; and ketopentose sugars, such as ribulose, arabulose, xylulose, and lyxulose, may be utilized. When a hexose serves as the carbohydrate reactant, or is used in combination with other reducing sugars and/or a polysaccharide, aldohexose sugars, such as glucose (*i.e*., dextrose), mannose, galactose, allose, altrose, talose, gulose, and idose; and ketohexose sugars, such as fructose, psicose, sorbose and tagatose, may be utilized. When a heptose serves as the carbohydrate reactant, or is used in combination with other reducing sugars and/or a polysaccharide, a ketoheptose sugar such as sedoheptulose may be utilized. Other stereoisomers of such carbohydrate reactants not known to occur naturally are also contemplated to be useful in preparing the binder compositions as described herein. When a polysaccharide serves as the carbohydrate, or is used in combination with monosaccharides, sucrose, lactose, maltose, starch, and cellulose may be utilized.

Furthermore, the carbohydrate reactant in the Maillard reaction may be used in combination with a polyhydroxy reactant, which polyhydroxy reactant is neither a carbohydrate nor a carboxylic acid, and which polyhydroxy reactant may substitute for up to 25% to 35% of the weight of the carbohydrate reactant. Examples of polyhydroxy reactants which can be used in combination with the carbohydrate reactant include, but are not limited to, trimethylolpropane, glycerol, pentaerythritol, sorbitol, 1,5-pentanediol, 1,6-hexanediol, polyTHF₆₅₀, polyTHF₂₅₀, textrion whey, polyvinyl alcohol, partially hydrolyzed polyvinyl acetate, fully hydrolyzed polyvinyl acetate, and mixtures thereof. In one aspect, a polyhydroxy reactant is sufficiently nonvolatile to maximize its ability to remain available for reaction with an hydroxy-monocarboxylic acid ammonium salt reactant. It is appreciated that the hydrophobicity of a polyhydroxy reactant may be a factor in determining the physical properties of a binder prepared as described herein.

When partially hydrolyzed polyvinyl acetate serves as a polyhydroxy reactant, a commercially available compound such as an 87-89% hydrolyzed polyvinyl acetate may be utilized, such as, DuPont ELVANOL 51-05. DuPont ELVANOL 51-05 has a molecular weight of 22,000-26,000 Da and a viscosity of 5.0-6.0 centipoises. Other partially hydrolyzed polyvinyl acetates contemplated to be useful in preparing binder compositions as described herein include, but are not limited to, 87-89% hydrolyzed polyvinyl acetates differing in molecular weight and viscosity from ELVANOL 51-05, such as, for example, DuPont ELVANOL 51-04, ELVANOL 51-08, ELVANOL 50-14, ELVANOL 52-22, ELVANOL 50-26, ELVANOL 50-42; and partially hydrolyzed polyvinyl acetates differing in molecular weight, viscosity, and/or degree of hydrolysis from ELVANOL 51-05, such as, DuPont ELVANOL 51-03 (86-89% hydrolyzed), ELVANOL 70-14 (95.0-97.0% hydrolyzed), ELVANOL 70-27 (95.5-96.5% hydrolyzed), ELVANOL 60-30 (90-93% hydrolyzed). Other partially hydrolyzed polyvinyl acetates contemplated to be useful in preparing binder compositions as described herein include, but are not limited to, Clariant MOWIOL 15-79, MOWIOL 3-83, MOWIOL 4-88, MOWIOL 5-88, MOWIOL 8-88, MOWIOL 18-88, MOWIOL 23-88, MOWIOL 26-88, MOWIOL 40-88, MOWIOL 47-88, and MOWIOL 30-92, as well as Celanese CELVOL 203, CELVOL 205, CELVOL 502, CELVOL 504, CELVOL 513, CELVOL 523, CELVOL 523TV, CELVOL 530, CELVOL 540, CELVOL 540TV, CELVOL 418, CELVOL 425, and CELVOL 443. Also contemplated to be useful are similar or analogous partially hydrolyzed polyvinyl acetates available from other commercial suppliers.

When fully hydrolyzed polyvinyl acetate serves as a polyhydroxy reactant, Clariant MOWIOL 4-98, having a molecular weight of 27,000 Da, may be utilized. Other fully hydrolyzed polyvinyl acetates contemplated to be useful in preparing binder compositions as described herein include, but are not limited to, DuPont ELVANOL 70-03 (98.0-98.8% hydrolyzed), ELVANOL 70-04 (98.0-98.8% hydrolyzed), ELVANOL 70-06 (98.5-99.2% hydrolyzed), ELVANOL 90-50 (99.0-99.8% hydrolyzed), ELVANOL 70-20 (98.5-99.2% hydrolyzed), ELVANOL 70-30 (98.5-99.2% hydrolyzed), ELVANOL 71-30 (99.0-99.8% hydrolyzed), ELVANOL 70-62 (98.4-99.8% hydrolyzed), ELVANOL 70-63 (98.5-99.2% hydrolyzed), ELVANOL 70-75 (98.5-99.2% hydrolyzed), Clariant MOWIOL 3-98, MOWIOL 6-98, MOWIOL 10-98, MOWIOL 20-98, MOWIOL 56-98, MOWIOL 28-99, and Celanese CELVOL 103, CELVOL 107, CELVOL 305, CELVOL 310, CELVOL 325, CELVOL 325LA, and CELVOL 350, as well as similar or analogous fully hydrolyzed polyvinyl acetates from other commercial suppliers.

The aforementioned Maillard reactants may be combined to make an aqueous composition that includes a carbohydrate reactant and an amine reactant. These aqueous binders represent examples of uncured binders. As discussed below, these aqueous compositions can be used as binders of the present invention. These binders are formaldehyde-free, curable, alkaline, aqueous binder compositions. Furthermore, as indicated above, the carbohydrate reactant of the Maillard reactants may be used in combination with a non-carbohydrate, non-acidic polyhydroxy reactant. Accordingly, any time the carbohydrate reactant is mentioned, it should be understood that it can be used in combination with a non-carbohydrate, non-acidic polyhydroxy reactant.

In one illustrative embodiment, the aqueous solution of Maillard reactants may include (i) an hydroxy-monocarboxylic acid ammonium salt reactant and (ii) a carbohydrate reactant having a reducing sugar. The pH of this solution prior to placing it in contact with the material to be bound can be greater than or equal to 7. In addition, this solution can have a pH of less than or equal to 10. The ratio of the number of moles of the hydroxy-monocarboxylic acid ammonium salt reactant to the number of moles of the carbohydrate reactant can be in the range from 1:1 to 1:5. In one illustrative variation, the ratio of the number of moles of the hydroxy-monocarboxylic acid ammonium salt reactant to the number of moles of the carbohydrate reactant in the binder composition is 1:2. In another variation, the ratio of the number of moles of the hydroxy-monocarboxylic acid ammonium salt reactant to the number of moles of the carbohydrate reactant is 1:3. In another variation, the ratio of the number of moles of the hydroxy-monocarboxylic acid ammonium salt reactant to the number of moles of the carbohydrate reactant is 1:4.

The uncured, formaldehyde-free, thermally-curable, alkaline, aqueous binder compositions described herein can be used to fabricate a number of different materials. In particular, these binders can be used to produce or promote cohesion in non-assembled or loosely-assembled matter by placing the binder in contact with the matter to be bound. Any number of well known techniques can be employed to place the aqueous binder in contact with the material to be bound. For example, the aqueous binder can be sprayed on (*e.g*., during the binding glass fibers) or applied via a roll-coat apparatus.

The aqueous binders described herein can be applied to a mat of glass fibers (*e.g*., sprayed onto the mat) during production of fiberglass insulation products. Once the aqueous binder is in contact with the glass fibers, the residual heat from the glass fibers (note that the glass fibers are made from molten glass and thus contain residual heat) and the flow of air through the fibrous mat will remove water from (*i.e*., dehydrate) the binder. Removing the water leaves the remaining components of the binder on the fibers as a coating of viscous or semi-viscous high-solids liquid. This coating of viscous or semi-viscous high-solids liquid functions as a binder. At this point, the mat has not been cured. In other words, the uncured binder functions to bind the glass fibers in the mat.

It should be understood that the aqueous binders described herein can be cured, and that drying and curing may occur either sequentially, contemporaneously, or concurrently. For example, any of the above-described aqueous binders can be disposed (*e.g*., sprayed) on the material to be bound, and then heated. Illustratively, in the case of making fiberglass insulation products, after the aqueous binder has been applied to the mat, the binder-coated mat is immediately or eventually transferred to a curing oven (eventual transfer is typical when additional components, such as various types of oversprays and porous glass fiber facings, for example, are added to the binder-coated mat prior to curing). In the curing oven the mat is heated (*e.g*., from 148.9°C (300 °F) to 315.6° (600 °F) and the binder is cured. Alternatively, the mat may be shipped in an uncured state, and then transferred to a curing mold in which heat is applied under pressure to cure the binder. The cured binder is a formaldehyde-free, water-resistant thermoset binder that attaches the glass fibers of the mat together. The mat of fiberglass may be processed to form one of several types of fiberglass materials, such as fiberglass insulation products.

It should be appreciated that materials including a collection of glass fibers bonded with the binders of the present invention may have a density in the range from 6.41 kg/m³ (0.4 lbs/ft³) to 96.11 kg/m³ (6 lbs/ft³). It should also be appreciated that such materials may have an R-value in the range from 2 to 60. Further, it should be appreciated that such materials may have a noise reduction coefficient in the range from 0.45 to 1.10.

In other illustrative embodiments of the present invention, a binder that is already cured can be disposed on a material to be bound. As indicated above, most cured binders of the present invention will typically contain water-insoluble melanoidins. Accordingly, these binders will also be water-resistant thermoset binders.

As discussed below, various additives can be incorporated into the binder composition. These additives may give the binders of the present invention additional desirable characteristics. For example, the binder may include one or more silicon-containing coupling agents as an additive(s). Many silicon-containing coupling agents are commercially available from the Dow-Corning Corporation, Petrarch Systems, and from the General Electric Company. Illustratively, the silicon-containing coupling agent includes compounds such as silylethers and alkylsilyl ethers, each of which may be optionally substituted, such as with halogen, alkoxy, amino, and the like. In one variation, the silicon-containing compound is an amino-substituted silane, such as, gamma-aminopropyltriethoxy silane (General Electric Silicones, SILQUEST A-1101; Wilton, CT; USA). In another variation, the silicon-containing compound is an amino-substituted silane, for example, aminoethylaminopropyltrimethoxy silane or ethylenediaminepropyltrimethoxysilane (Dow Z-6020; Dow Chemical, Midland, MI; USA). In another variation, the silicon-containing compound is gamma-glycidoxypropyltrimethoxysilane (General Electric Silicones, SILQUEST A-187). In yet another variation, the silicon-containing compound is an n-propylamine silane (Creanova (formerly Huls America) HYDROSIL 2627; Creanova; Somerset, N.J.; U.S.A.).

The silicon-containing coupling agents are typically present in the binders of the present invention in the range from 0.1 percent to 1 percent by weight based upon the dissolved binder solids (*i.e.,* 0.1 percent to 1 percent based upon the weight of the solids added to the aqueous solution). In one application, one or more of these silicon-containing compounds can be added to the aqueous uncured binder. The binder is then applied to the material to be bound. Thereafter, the binder may be cured if desired. These silicon-containing compounds enhance the ability of the binder to adhere to the matter the binder is disposed on, such as glass fibers. Enhancing the binder's ability to adhere to the matter improves, for example, its ability to produce or promote cohesion in non-assembled or loosely-assembled substances.

A binder that includes a silicon-containing coupling agent can be prepared from an hydroxy-monocarboxylic acid and a carbohydrate, the latter having reducing sugar, which reactants are added as solids, mixed into and dissolved in water, and then treated with aqueous amine base (to neutralize the hydroxy-monocarboxylic acid) and a silicon-containing coupling agent to generate an aqueous solution 3-50 weight percent in each of an hydroxy-monocarboxylic acid reactant and a carbohydrate reactant. In one illustrative variation, a binder that includes a silicon-containing coupling agent can be prepared by admixing 3 weight percent to 50 weight percent aqueous solution of an hydroxy-monocarboxylic acid reactant, already neutralized with an amine base or neutralized *in situ,* with 3-50 weight percent aqueous solution of a carbohydrate reactant having reducing sugar, and an effective amount of a silicon-containing coupling agent.

In another illustrative embodiment, a binder of the present invention may include one or more corrosion inhibitors as an additive(s). These corrosion inhibitors may prevent or inhibit the eating or wearing away of a substance, such as metal, caused by chemical decomposition brought about by an acid. When a corrosion inhibitor is included in a binder of the present invention, the binder's corrosivity is decreased as compared to the corrosivity of the binder without the inhibitor present. In another embodiment, these corrosion inhibitors can be utilized to decrease the corrosivity of the glass fiber-containing compositions described herein. Illustratively, corrosion inhibitors may include one or more of the following, a dedusting oil, a monoammonium phosphate, sodium metasilicate pentahydrate, melamine, tin(II)oxalate, and/or methylhydrogen silicone fluid emulsion. When included in a binder of the present invention, corrosion inhibitors are typically present in the binder in the range from 0.5 percent to 2 percent by weight based upon the dissolved binder solids.

In another illustrative embodiment, a binder of the present invention may include one or more polycarboxylic acids as an additive(s), which polycarboxylic acid(s) may substitute for up to 25% of the hydroxy-monocarboxylic acid on a mole basis. As used herein, the term "polycarboxylic acid" includes a dicarboxylic, tricarboxylic, tetracarboxylic, pentacarboxylic, and like monomeric polycarboxylic acids, and anhydrides, and combinations thereof, as well as polymeric polycarboxylic acids, anhydrides, copolymers, and combinations thereof. In one aspect, the polycarboxylic acid may be substituted with other chemical functional groups.

Illustratively, a monomeric polycarboxylic acid additive may be a dicarboxylic acid, including, but not limited to, unsaturated aliphatic dicarboxylic acids, saturated aliphatic dicarboxylic acids, aromatic dicarboxylic acids, unsaturated cyclic dicarboxylic acids, saturated cyclic dicarboxylic acids, hydroxy-substituted derivatives thereof, and the like. Or, illustratively, the polycarboxylic acid additive may be a tricarboxylic acid, including, but not limited to, unsaturated aliphatic tricarboxylic acids, saturated aliphatic tricarboxylic acids, aromatic tricarboxylic acids, unsaturated cyclic tricarboxylic acids, saturated cyclic tricarboxylic acids, hydroxy-substituted derivatives thereof, and the like, and so on and so forth. It is appreciated that any such polycarboxylic acids may be optionally substituted, such as with hydroxy, halo, alkyl, alkoxy, and the like. In one variation, the polycarboxylic acid additive is the saturated aliphatic tricarboxylic acid, citric acid. Other suitable polycarboxylic acid additives are contemplated to include, but are not limited to, aconitic acid, adipic acid, azelaic acid, butane tetracarboxylic acid dihydride, butane tricarboxylic acid, chlorendic acid, citraconic acid, dicyclopentadiene-maleic acid adducts, diethylenetriamine pentaacetic acid, adducts of dipentene and maleic acid, ethylenediamine tetraacetic acid (EDTA), fully maleated rosin, maleated tall-oil fatty acids, fumaric acid, glutaric acid, isophthalic acid, itaconic acid, maleated rosin oxidized with potassium peroxide to alcohol then carboxylic acid, maleic acid, malic acid, mesaconic acid, biphenol A or bisphenol F reacted via the KOLBE-Schmidt reaction with carbon dioxide to introduce 3-4 carboxyl groups, oxalic acid, phthalic acid, sebacic acid, succinic acid, tartaric acid, terephthalic acid, tetrabromophthalic acid, tetrachlorophthalic acid, tetrahydrophthalic acid, trimellitic acid, trimesic acid, and the like, and anhydrides, and combinations thereof.

Illustratively, a polymeric polycarboxylic acid additive may be an acid, including, but not limited to, polyacrylic acid, polymethacrylic acid, polymaleic acid, and like polymeric polycarboxylic acids, anhydrides thereof, and mixtures thereof, as well as copolymers of acrylic acid, methacrylic acid, maleic acid, and like carboxylic acids, anhydrides thereof, and mixtures thereof. Examples of commercially available polyacrylic acids include AQUASET-529 (Rohm & Haas, Philadelphia, PA, USA), CRITERION 2000 (Kemira, Helsinki, Finland, Europe), NF1 (H.B. Fuller, St. Paul, MN, USA), and SOKALAN (BASF, Ludwigshafen, Germany, Europe). With respect to SOKALAN, this is a water-soluble polyacrylic copolymer of acrylic acid and maleic acid, having a molecular weight of approximately 4000. AQUASET- 529 is a composition containing polyacrylic acid cross-linked with glycerol, also containing sodium hypophosphite as a catalyst. CRITERION 2000 is an acidic solution of a partial salt of polyacrylic acid, having a molecular weight of approximately 2000. With respect to NF1, this is a copolymer containing carboxylic acid functionality and hydroxy functionality, as well as units with neither functionality; NF1 also contains chain transfer agents, such as sodium hypophosphite or organophosphate catalysts.

Further, compositions including polymeric polycarboxylic acids are also contemplated to be useful as additives in preparing the binders described herein, such as those compositions described in U.S. Patents Nos. 5,318,990, 5,661,213, 6,136,916, and 6,331,350, the disclosures of which are hereby incorporated herein by reference in their entirety. Described in U.S. Patents Nos. 5,318,990 and 6,331,350 are compositions comprising an aqueous solution of a polymeric polycarboxylic acid, a polyol, and a catalyst.

As described in U.S. Patents Nos. 5,318,990 and 6,331,350, the polymeric polycarboxylic acid comprises an organic polymer or oligomer containing more than one pendant carboxy group. The polymeric polycarboxylic acid may be a homopolymer or copolymer prepared from unsaturated carboxylic acids including, but not necessarily limited to, acrylic acid, methacrylic acid, crotonic acid, isocrotonic acid, maleic acid, cinnamic acid, 2-methylmaleic acid, itaconic acid, 2-methylitaconic acid, α,β-methyleneglutaric acid. Alternatively, the polymeric polycarboxylic acid may be prepared from unsaturated anhydrides including, but not necessarily limited to, maleic anhydride, itaconic anhydride, acrylic anhydride, methacrylic anhydride, as well as mixtures thereof. Methods for polymerizing these acids and anhydrides are well-known in the chemical art. The polymeric polycarboxylic acid may additionally comprise a copolymer of one or more of the aforementioned unsaturated carboxylic acids or anhydrides and one or more vinyl compounds including, but not necessarily limited to, styrene, α-methylstyrene, acrylonitrile, methacrylonitrile, methyl acrylate, ethyl acrylate, n-butyl acrylate, isobutyl acrylate, methyl methacrylate, n-butyl methacrylate, isobutyl methacrylate, glycidyl methacrylate, vinyl methyl ether, vinyl acetate, and the like. Methods for preparing these copolymers are well-known in the art. The polymeric polycarboxylic acids may comprise homopolymers and copolymers of polyacrylic acid. The molecular weight of the polymeric polycarboxylic acid, and in particular polyacrylic acid polymer, may be is less than 10000, less than 5000, or 3000 or less. For example, the molecular weight may be 2000.

As described in U.S. Patents Nos. 5,318,990 and 6,331,350, the polyol (in a composition including a polymeric polycarboxylic acid) contains at least two hydroxyl groups. The polyol should be sufficiently nonvolatile such that it will substantially remain available for reaction with the polymeric polycarboxylic acid in the composition during heating and curing operations. The polyol may be a compound with a molecular weight less than 1000 bearing at least two hydroxyl groups such as, ethylene glycol, glycerol, pentaerythritol, trimethylol propane, sorbitol, sucrose, glucose, resorcinol, catechol, pyrogallol, glycollated ureas, 1,4-cyclohexane diol, diethanolamine, triethanolamine, and certain reactive polyols, for example, β-hydroxyalkylamides such as, for example, bis[*N,N*-di(β-hydroxyethyl)]adipamide, or it may be an addition polymer containing at least two hydroxyl groups such as, polyvinyl alcohol, partially hydrolyzed polyvinyl acetate, and homopolymers or copolymers of hydroxyethyl(meth)acrylate, hydroxypropyl(meth)acrylate.

As described in U.S. Patents Nos. 5,318,990 and 6,331,350, the catalyst (in a composition including a polymeric polycarboxylic acid) is a phosphorous-containing accelerator which may be a compound with a molecular weight less than 1000 such as, an alkali metal polyphosphate, an alkali metal dihydrogen phosphate, a polyphosphoric acid, and an alkyl phosphinic acid or it may be an oligomer or polymer bearing phosphorous-containing groups, for example, addition polymers of acrylic and/or maleic acids formed in the presence of sodium hypophosphite, addition polymers prepared from ethylenically unsaturated monomers in the presence of phosphorous salt chain transfer agents or terminators, and addition polymers containing acid-functional monomer residues, for example, copolymerized phosphoethyl methacrylate, and like phosphonic acid esters, and copolymerized vinyl sulfonic acid monomers, and their salts. The phosphorous-containing accelerator may be used at a level of from 1% to 40%, by weight based on the combined weight of the polymeric polycarboxylic acid and the polyol. A level of phosphorous-containing accelerator of from 2.5% to 10%, by weight based on the combined weight of the polymeric polycarboxylic acid and the polyol may be used. Examples of such catalysts include, but are not limited to, sodium hypophosphite, sodium phosphite, potassium phosphite, disodium pyrophosphate, tetrasodium pyrophosphate, sodium tripolyphosphate, sodium hexametaphosphate, potassium phosphate, potassium polymetaphosphate, potassium polyphosphate, potassium tripolyphosphate, sodium trimetaphosphate, and sodium tetrametaphosphate, as well as mixtures thereof.

Compositions including polymeric polycarboxylic acids described in U.S. Patents Nos. 5,661,213 and 6,136,916 that are contemplated to be useful as additives in preparing the binders described herein comprise an aqueous solution of a polymeric polycarboxylic acid, a polyol containing at least two hydroxyl groups, and a phosphorous-containing accelerator, wherein the ratio of the number of equivalents of carboxylic acid groups to the number of equivalents of hydroxyl groups is from 1:0.01 to 1:3

As described in U.S. Patents Nos. 5,661,213 and 6,136,916, the polymeric polycarboxylic acid may be a polyester containing at least two carboxylic acid groups or an addition polymer or oligomer containing at least two copolymerized carboxylic acid-functional monomers. The polymeric polycarboxylic acid is preferably an addition polymer formed from at least one ethylenically unsaturated monomer. The addition polymer may be in the form of a solution of the addition polymer in an aqueous medium such as, an alkali-soluble resin which has been solubilized in a basic medium; in the form of an aqueous dispersion, for example, an emulsion-polymerized dispersion; or in the form of an aqueous suspension. The addition polymer must contain at least two carboxylic acid groups, anhydride groups, or salts thereof. Ethylenically unsaturated carboxylic acids such as, methacrylic acid, acrylic acid, crotonic acid, fumaric acid, maleic acid, 2-methyl maleic acid, itaconic acid, 2-methyl itaconic acid, α,β-methylene glutaric acid, monoalkyl maleates, and monoalkyl fumarates; ethylenically unsaturated anhydrides, for example, maleic anhydride, itaconic anhydride, acrylic anhydride, and methacrylic anhydride; and salts thereof, at a level of from 1% to 100%, by weight, based on the weight of the addition polymer, may be used. Additional ethylenically unsaturated monomers may include acrylic ester monomers including methyl acrylate, ethyl acrylate, butyl acrylate, 2-ethylhexyl acrylate, decyl acrylate, methyl methacrylate, butyl methacrylate, isodecyl methacrylate, hydroxyethyl acrylate, hydroxyethyl methacrylate, and hydroxypropyl methacrylate; acrylamide or substituted acrylamides; styrene or substituted styrenes; butadiene; vinyl acetate or other vinyl esters; acrylonitrile or methacrylonitrile. The addition polymer containing at least two carboxylic acid groups, anhydride groups, or salts thereof may have a molecular weight from 300 to 10,000,000. A molecular weight from 1000 to 250,000 may be used. When the addition polymer is an alkali-soluble resin having a carboxylic acid, anhydride, or salt thereof, content of from 5% to 30%, by weight based on the total weight of the addition polymer, a molecular weight from 10,000 to 100,000 may be utilized Methods for preparing these additional polymers are well-known in the art.

As described in U.S. Patents Nos. 5,661,213 and 6,136,916, the polyol (in a composition including a polymeric polycarboxylic acid) contains at least two hydroxyl groups and should be sufficiently nonvolatile that it remains substantially available for reaction with the polymeric polycarboxylic acid in the composition during heating and curing operations. The polyol may be a compound with a molecular weight less than 1000 bearing at least two hydroxyl groups, for example, ethylene glycol, glycerol, pentaerythritol, trimethylol propane, sorbitol, sucrose, glucose, resorcinol, catechol, pyrogallol, glycollated ureas, 1,4-cyclohexane diol, diethanolamine, triethanolamine, and certain reactive polyols, for example, β-hydroxyalkylamides, for example, bis-[*N,N*-di(β-hydroxyethyl)]adipamide, bis[*N,N-*di(β-hydroxypropyl)] azelamide, bis[*N-N*-di(β-hydroxypropyl) ] adipamide, bis[*N-N-*di(β-hydroxypropyl)] glutaramide, bis[*N-N*-di(β-hydroxypropyl)] succinamide, and bis[*N*-methyl-*N*-(β-hydroxyethyl)] oxamide, or it may be an addition polymer containing at least two hydroxyl groups such as, polyvinyl alcohol, partially hydrolyzed polyvinyl acetate, and homopolymers or copolymers of hydroxyethyl (meth)acrylate, hydroxypropyl (meth)acrylate.

As described in U.S. Patents Nos. 5,661,213 and 6,136,916, the phosphorous-containing accelerator (in a composition including a polymeric polycarboxylic acid) may be a compound with a molecular weight less than 1000, such as an alkali metal hypophosphite salt, an alkali metal phosphite, an alkali metal polyphosphate, an alkali metal dihydrogen phosphate, a polyphosphoric acid, and an alkyl phosphinic acid, or it may be an oligomer or polymer bearing phosphorous-containing groups such as addition polymers of acrylic and/or maleic acids formed in the presence of sodium hypophosphite, addition polymers prepared from ethylenically unsaturated monomers in the presence of phosphorous salt chain transfer agents or terminators, and addition polymers containing acid-functional monomer residues such as, copolymerized phosphoethyl methacrylate, and like phosphonic acid esters, and copolymerized vinyl sulfonic acid monomers, and their salts. The phosphorous-containing accelerator may be used at a level of from 1% to 40%, by weight based on the combined weight of the polyacid and the polyol. A level of phosphorous-containing accelerator of from 2.5% to 10%, by weight based on the combined weight of the polyacid and the polyol, may be utilized.

It should be appreciated that when a monomeric or a polymeric polycarboxylic acid is used as an additive in binders of the present invention, the molar equivalents of ammonium ion resulting therefrom may or may not be equal to the molar equivalents of acid groups present in the polycarboxylic acid. In one illustrative example, an ammonium salt may be monobasic, dibasic, or tribasic when a tricarboxylic acid is used as a polycarboxylic acid additive. Thus, the molar equivalents of the ammonium ion may be present in an amount less than or about equal to the molar equivalents of acid groups present in a polycarboxylic acid additive. Accordingly, the ammonium salt can be monobasic or dibasic when the polycarboxylic acid additive is a dicarboxylic acid. Further, the molar equivalents of ammonium ion may be present in an amount less than, or about equal to, the molar equivalents of acid groups present in a polymeric polycarboxylic acid additive.

By following the guidelines disclosed herein, one of ordinary skill in the art will be able to vary the identity and concentration of the components of the aqueous binder to produce a wide range of binder compositions. In particular, aqueous binder compositions can be formulated to have an alkaline pH. For example, a pH in the range from greater than or equal to 7 to less than or equal to 10. Examples of the binder components that can be manipulated include (i) the hydroxy-monocarboxylic acid reactant, (ii) the amine base, (iii) the carbohydrate reactant, (iv) the polyhydroxy reactant, (v) the silicon-containing coupling agent (additive), (vi) the corrosion inhibitor (additive), and (vii) the polycarboxylic acid (additive). Having the pH of the aqueous binders (*e.g*., uncured binders) of the present invention in the alkaline range inhibits the corrosion of materials the binder comes in contact with, such as machines used in the manufacturing process (*e.g*., in manufacturing fiberglass). Note that this is especially true when the corrosivity of acidic binders is compared to binders of the present invention. Accordingly, the "life span" of such machinery increases while the cost of maintaining these machines decreases. Furthermore, standard equipment can be used with the binders of the present invention, rather than having to utilize relatively corrosion-resistant machine components that come into contact with acidic binders, such as stainless steel components. Therefore, the binders disclosed herein may decrease the cost of manufacturing bound materials.

### EXAMPLE 1

### Preparation of Ammonium Hydroxymonocarboxylate-Sugar Maillard Binders for Shellbones

Aqueous ammonium glycolate-dextrose (1:2) binders, which binders were used to construct glass bead shellbones, were prepared by the following general procedure: Powdered dextrose monohydrate (37.16 g) and 70% glycolic acid (10.51 g) were combined in a 400 ml beaker and 21.53 g of distilled water was added. To this mixture were added 7.3 g of 28% aqueous ammonia with agitation, and agitation then continued for several minutes. To the resulting solution were added 13.5 g of a 1% solution of SILQUEST Z-6020 silane to produce a pH ~ 8-9 solution (using pH paper), which solution contained approximately 50% dissolved dextrose monohydrate and dissolved ammonium glycolate solids (as a percentage of total weight of solution); a 2-g sample of this solution, upon thermal curing at 400 °F for 30 minutes, would yield 27% solids (the weight loss being attributed to dehydration during thermoset binder formation). Silanes other than SILQUEST Z-6020 Silane may be included in the ammonium glycolate-dextrose (1:2) binder; for example, substitutions may be made with SILQUEST A-1101 Silane, SILQUEST A-187 Silane, or HYDROSIL 2627 Silane. When additives were included in the ammonium glycolate-dextrose (1:2) binder to produce binder variants, the standard solution was distributed among glass bottles in 300-g aliquots to which individual additives were then supplied.

When hydroxy-monocarboxylic acids other than glycolic acid, sugars other than dextrose, and/or additives are to be used to prepare ammonium hydroxy-monocarboxylate-sugar Maillard binder variants, the same general procedure will be used as that described above for preparation of an aqueous ammonium glycolate-dextrose (1:2) binder. For ammonium hydroxy-monocarboxylate-sugar binder variants, adjustments will be made as necessary to accommodate the inclusion of, for example, a polycarboxylic acid as an additive, or a triose, for example, instead of dextrose, or to accommodate the inclusion of, for example, a polyhydroxy reactant. Such adjustments will include, for example, adjusting the volume of aqueous ammonia necessary to generate the ammonium salt, adjusting the gram amounts of reactants necessary to achieve a desired molar ratio of ammonium hydroxy-monocarboxylate to sugar, and/or including an additive in a desired weight percent.

### EXAMPLE 2

### Preparation of Triammonium Citrate-Dextrose (1:6) Maillard Binder for Shellbones

Aqueous triammonium citrate-dextrose (1:6) binders, which binders were used to construct glass bead shellbone controls, were prepared by the following general procedure: Powdered dextrose monohydrate (37.16 g) and citric acid monohydrate (6.77 g) were combined in a 400 ml beaker and 25.3 g of distilled water was added. To this mixture were added 7.3 g of 28% aqueous ammonia with agitation, and agitation then continued for several minutes. To the resulting solution were added 13.5 g of a 1% solution of SILQUEST Z-6020 silane to produce a pH ~ 8-9 solution (using pH paper), which solution contained approximately 50% dissolved dextrose monohydrate and dissolved ammonium citrate solids (as a percentage of total weight of solution); a 2-g sample of this solution, upon thermal curing at 400 °F for 30 minutes, would yield 30% solids (the weight loss being attributed to dehydration during thermoset binder formation).

### EXAMPLE 3

### Preparation/Weathering/Testing of Glass Bead Shellbone Compositions Prepared with Ammonium Glycolate-Dextrose (1:2) and Triammonium Citrate-Dextrose (1:6) Maillard Binders

When evaluated for their "dry" and "weathered" tensile strength, glass bead-containing shellbone compositions prepared with a given binder provide an indication of the likely tensile strength and the likely durability, respectively, of fiberglass insulation prepared with that particular binder. Predicted durability is based on a shellbone's weathered tensile strength : dry tensile strength ratio. Shellbones were prepared with Maillard binders, then weathered, and tested as follows:

### Preparation Procedure for Shellbones:

A shellbone mold (Dietert Foundry Testing Equipment; Heated Shell Curing Accessory, Model 366, and Shell Mold Accessory) was set to a desired temperature, generally 218.3°C (425 °F), and allowed to heat up for at least one hour. While the shellbone mold was heating, approximately 90 g of an aqueous Maillard binder (generally 30% in binder solids) was prepared as described in Examples 1 and 2. Using a large glass beaker, 873 g of glass beads (Quality Ballotini Impact Beads, Spec. AD, US Sieve 70-140, 106-212 micron-#7, from Potters Industries, Inc.) were weighed by difference. The glass beads were poured into a clean and dry mixing bowl, which bowl was mounted onto an electric mixer stand. Approximately 90 g of aqueous Maillard binder were obtained, and the binder then poured slowly into the glass beads in the mixing bowl. The electric mixer was then turned on and the glass beads/aqueous Maillard binder mixture was agitated for one minute. Using a large spatula, the sides of the whisk (mixer) were scraped to remove any clumps of binder, while also scraping the edges wherein the glass beads lay in the bottom of the bowl. The mixer was then turned back on for an additional minute, then the whisk (mixer) was removed from the unit, followed by removal of the mixing bowl containing the glass beads/aqueous Maillard binder mixture. Using a large spatula, as much of the binder and glass beads attached to the whisk (mixer) as possible were removed and then stirred into the glass beads/ammonium polycarboxylate-sugar binder mixture in the mixing bowl. The sides of the bowl were then scraped to mix in any excess binder that might have accumulated on the sides. At this point, the glass beads/aqueous Maillard binder mixture was ready for molding in a shellbone mold.

The slides of the shellbone mold were confirmed to be aligned within the bottom mold platen. Using a large spatula, a glass beads/aqueous Maillard binder mixture was then quickly added into the three mold cavities within the shellbone mold. The surface of the mixture in each cavity was flattened out, while scraping off the excess mixture to give a uniform surface area to the shellbone. Any inconsistencies or gaps that existed in any of the cavities were filled in with additional glass beads/aqueous Maillard binder mixture and then flattened out. Once a glass beads/aqueous Maillard binder mixture was placed into the shellbone cavities, and the mixture was exposed to heat, curing began. As manipulation time can affect test results, e.g., shellbones with two differentially cured layers can be produced, shellbones were prepared consistently and rapidly. With the shellbone mold filled, the top platen was quickly placed onto the bottom platen. At the same time, or quickly thereafter, measurement of curing time was initiated by means of a stopwatch, during which curing the temperature of the bottom platen ranged from 204.4°C (400 °F) to 221.1°C (430 °F), while the temperature of the top platen ranged from 226.7°C (440 °F) to 243.3°C (470 °F). At seven minutes elapsed time, the top platen was removed and the slides pulled out so that all three shellbones could be removed. The freshly made shellbones were then placed on a wire rack, adjacent to the shellbone mold platen, and allowed to cool to room temperature. Thereafter, each shellbone was labeled and placed individually in a plastic storage bag labeled appropriately. If shellbones could not be tested on the day they were prepared, the shellbone-containing plastic bags were placed in a desiccator unit.

### Conditioning (Weathering) Procedure for Shellbones:

Shellbones were introduced into an Osprey autoclave and the sterilization program initiated. This program consists of 5 minute air purge time, followed by "sterilization" for 15 minutes with saturated steam at 121°C, then followed by about 1/2 hour of controlled pressure release and cool-down to atmospheric pressure and about 80°C. At this point the samples were removed from the autoclave and stored in ziplock bags prior to being tested for strength using the procedure below.

### Test Procedure for Breaking Shellbones:

In the Instron room, the shellbone test method was loaded on the 5500 R Instron machine while ensuring that the proper load cell was installed *(i.e.,* Static Load Cell 5 kN), and the machine allowed to warm up for fifteen minutes. During this period of time, shellbone testing grips were verified as being installed on the machine. The load cell was zeroed and balanced, and then one set of shellbones was tested at a time as follows: A shellbone was removed from its plastic storage bag and then weighed. The weight (in grams) was then entered into the computer associated with the Instron machine. The measured thickness of the shellbone (in inches) was then entered, as specimen thickness, three times into the computer associated with the Instron machine. A shellbone specimen was then placed into the grips on the Instron machine, and testing initiated via the keypad on the Instron machine. After removing a shellbone specimen, the measured breaking point was entered into the computer associated with the Instron machine, and testing continued until all shellbones in a set were tested.

Test results are shown in Tables 1-2, which results are dry tensile strength (as breaking force, in Newtons), weathered tensile strength (as breaking force, in Newtons), and weathered : dry tensile strength ratio.

### EXAMPLE 4

### Preparation of Ammonium Glycolate-HFCS (1:2) Maillard Binder/Glass Fiber Compositions: Residential R-13 Kraft Faced Batts (3.5 in x 15 in x 94 in)

High fructose corn syrup (42% fructose, 52% dextrose), referred to herein as HFCS (374.5 gallons, 71% solids), and 89.0 gallons of 70% glycolic acid were added to a 2000-gallon mixing tank, and then 1085 gallons of soft water were added thereto. Thereafter, 116.6 gallons of 19% ammonia were added under agitation, followed by 16.4 lbs of A-1101 silane. The pH of the resulting binder solution was approximately 8, as indicated by the smell of ammonia. Although a 15%-solids binder solution was targeted, a 10%-solids binder solution was produced as determined by using an Ohaus MB 450 moisture balance analyzer in which 2 grams of binder solution was baked for 10 minutes at 200 °C on a glass fiber filter pad. The binder solution was stirred for several minutes before being transferred to a hold tank for use in the manufacture of glass fiber insulation, specifically, a product called "Residential R-13 Kraft Faced Batts."

Residential R-13 Kraft Faced Batts were prepared using conventional fiberglass manufacturing procedures; such procedures are described generally in connection with Fig. 3 above and in AP 42, *Mineral Products Industry -* Fifth Edition, Volume I, Chapter 11: Sec. 11.13, the disclosure of which is hereby incorporated herein by reference in its entirety.

Nominal specifications of the Residential R-13 Kraft Faced Batts product were as follows: 3.71 kg/m³ (0.2316 pound per square foot density), 6.92 kg/m³ (0.4320 pound per cubic foot density), a target recovery of 8.89 cm (3.5 inches) thick at the end of the line, with a fiber diameter of 18 hundred thousandths of an inch (4.6 microns), 3.8% binder content, and 0.7% mineral oil content (for dedusting) for an overall LOI of 4.5%. Four non-standard set points were achieved: Set-point 1 - close to nominal but with 5.5% overall LOI; Set-point 2 - 10% higher density; Set-point 3 - targeted 7% overall LOI at the 10% higher-than-standard density; and Set-point 4 - returned to standard density but with 7% overall LOI. Curing oven temperature was set at 298.9°C (570 °F). Product exited the oven brown, and with greater smoke than that prepared with a triammonium citrate-dextrose (1:6) Maillard binder.

### EXAMPLE 5

### Testing/Evaluation of Ammonium Glycolate-HFCS (1:2) Maillard Binder/Glass Fiber Compositions

The ammonium glycolate-HFCS (1:2) Maillard binder/glass fiber compositions from Example 4, *i.e.,* Residential R-13 Kraft Faced Batts (3.5 in x 15 in x 94 in), were tested versus a corresponding phenol-formaldehyde (PF) binder/glass fiber composition for the following: thickness recovery, parting strength, and stiffness-rigidity. The results of these tests are shown in Table 3. Specific tests conducted and conditions for performing these tests are as follows:

### Thickness Recovery

Thickness tests were performed on Residential R-13 Kraft Faced Batts from Example 4, as well as a corresponding phenol-formaldehyde (PF) binder/glass fiber composition, using internal test methods K-120, "Test Procedure for Determining End-of-Line Dead-Pin Thickness - Batts," and K-128, "Test Procedure for Recovered Thickness of Batt Products - Drop Method," both of which test methods are similar to ASTM C 167, "Standard Test Methods for Thickness and Density of Blanket or Batt Thermal Insulations." Recovered thickness was measured by forcing a pin gauge through a batt sample, either 15 minutes after packaging or at a later point in time, until the pin contacts a flat, hard surface underlying the sample, and then measuring the recovered thickness with a steel rule.

### Parting Strength

The parting strength of Residential R-13 Kraft Faced Batts from Example 4, and a corresponding phenol-formaldehyde (PF) binder/glass fiber composition, were determined in accordance with internal test method KRD-161, which test method is virtually identical to ASTM C 686, "Parting Strength of Mineral Fiber Batt and Blanket-Type Insulation."

### Stiffness-Rigidity

Stiffness-rigidity testing was performed on R-13 Kraft Faced Batts from Example 4, as well as a corresponding phenol-formaldehyde (PF) binder/glass fiber composition, using internal test procedure K-117, "Test Procedure for Rigidity of Building Insulation." A batt sample, 120.65 cm (47.5 inches) in length ± 1.27 cm (± 0.5 inch), was placed on the center support bar of a stiffness test apparatus, which apparatus included a protractor scale directly behind the center support bar. With the ends of the sample hanging free, the angle (in degrees) at each end of the sample was recorded by sighting along the bottom edge of the sample while reading the protractor scale.

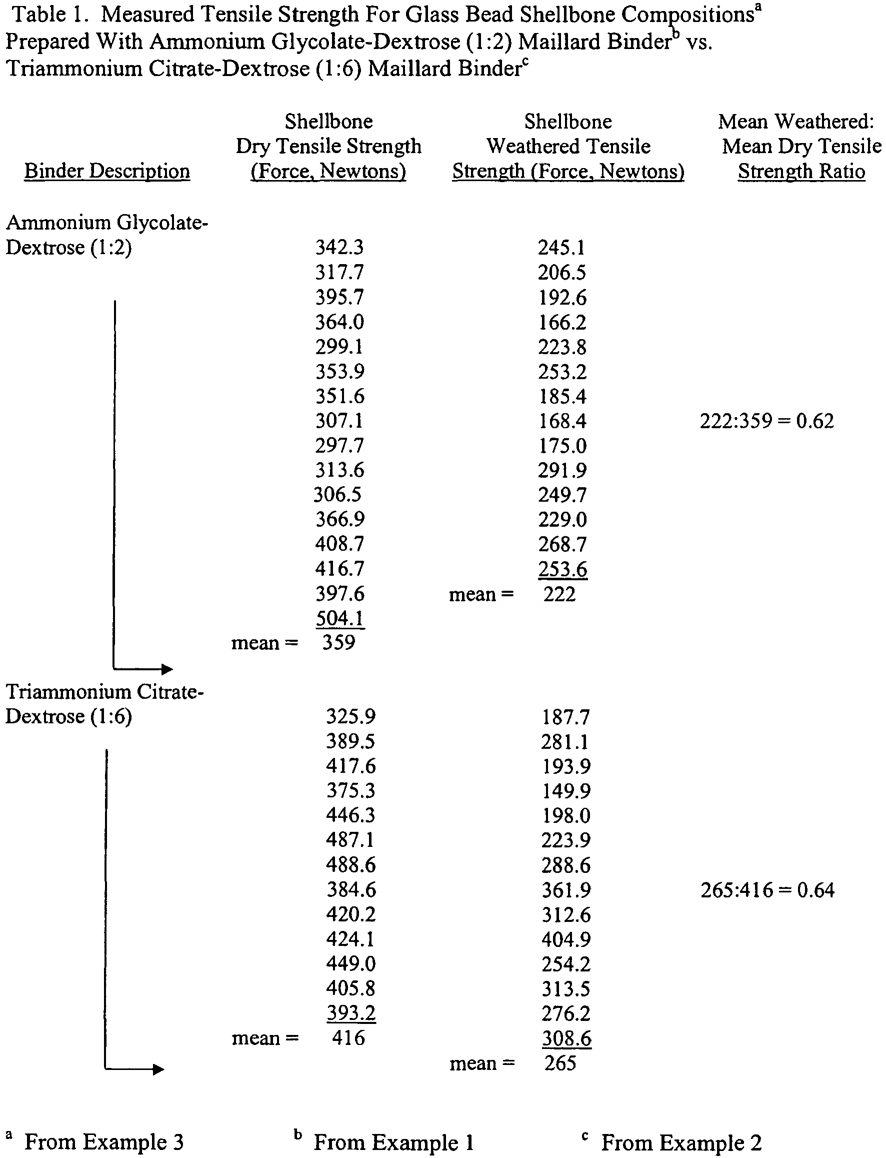

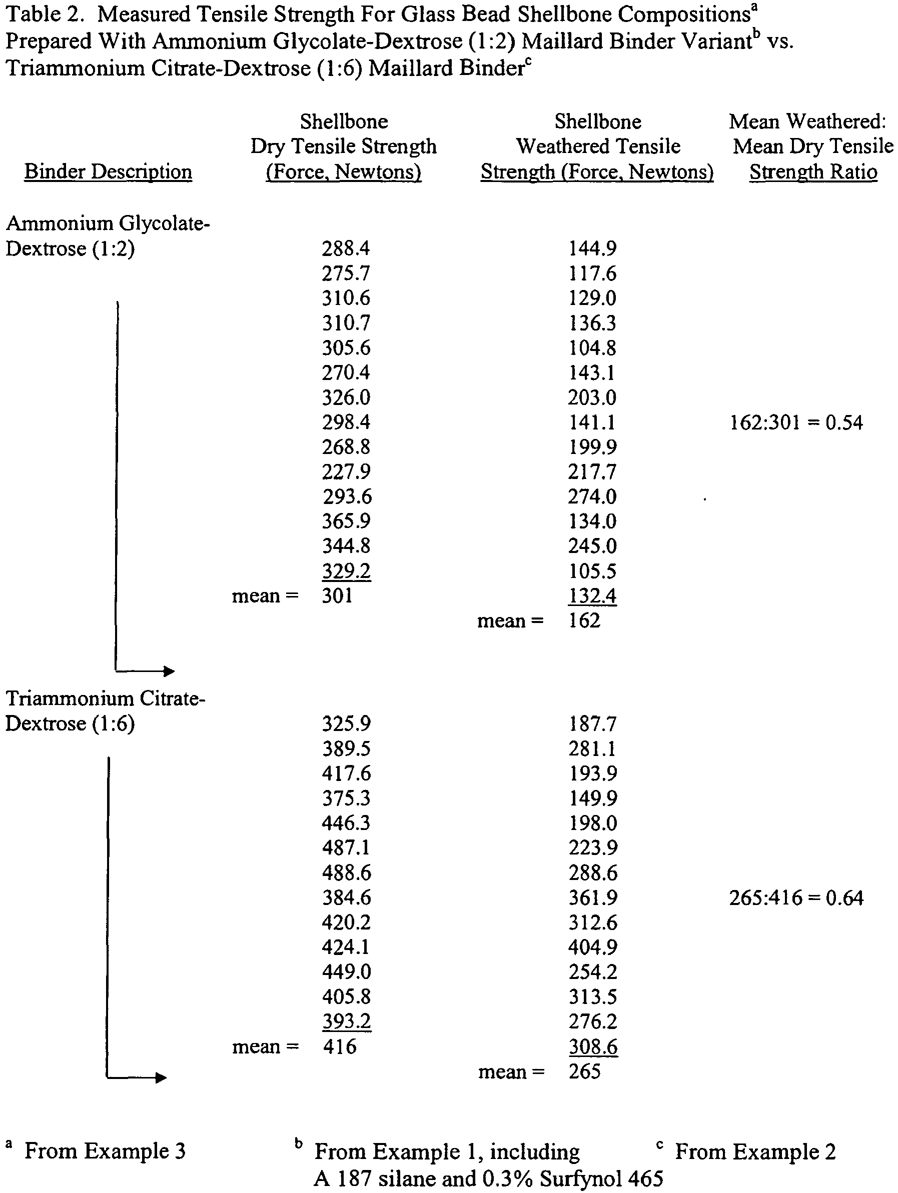

**Table 3. Testing Results for Residential R-13 Kraft Faced Batts from Example 4: Ammonium Glycolate-HFCS (1:2) Maillard Binder vs. Standard PF Binder**

| Test | | PF Binder Control Set-Point^{a} | Set-Point 1^{b} (% of Control) | Set-Point 2^{c} (% of Control) | Set-Point 3^{d} (% of Control) | Set-Point 4^{e} (% of Control) |
|---|---|---|---|---|---|---|
| Thickness recovery | | | | | | |
| (Dead pin, in.): | Tₒ | 3.71 | 3.69 (99%) | 3.17 (85%) | 3.45 (93%) | 3.39 (91%) |
| | 1 week | 3.71 | 3.55 (96%) | 3.28 (88%) | 3.50 (94%) | 3.53 (95%) |
| | | | | | | |
| Thickness recovery | | | | | | |
| (Drop, in.): | Tₒ | 3.81 | 4.04 (106%) | 3.55 (93%) | 3.73 (98%) | 3.73 (98%) |
| | 1 week | 3.88 | 4.02 (104%) | 3.60 (93%) | 3.74 (96%) | 3.97 (102%) |
| | | | | | | |
| PartingStrength (g/g) | | | | | | |
| Machine Direction | | 264.49 | 152.30 (58%) | 202.32 (76%) | 215.53 (81%) | 175.72 (66%) |
| Cross Machine Direction | | 299.74 | 139.71 (47%) | 208.31 (69%) | 142.61 (48%) | 194.71 (65%) |
| Average | | 282 | 146 (52%) | 205 (73%) | 179 (63%) | 185 (66%) |
| | | | | | | |
| Stiffness-Rigidity (Degrees) | | 31 | 53 (NA) | 47 (NA) | 44 (NA) | 54 (NA) |

| | | | | | | |
|---|---|---|---|---|---|---|
| ^{a} Nominal Phenol-formaldehyde binder level of 4.5%, nominal Sq. Ft. Wt. of 0.2316 ^{b} Target Maillard binder level of 5%, nominal Sq. Ft. Wt. of 0.2316 ^{c} Target Maillard binder level of 8%, nominal Sq. Ft. Wt. of 0.2385 ^{d} Target Maillard binder level of 8%, 10% target increase in Sq. Ft. Wt. of 0.2624 ^{e} Target Maillard binder level of 5%, 10% target increase in Sq. Ft. Wt. of 0.2548 | | | | | | |

## Claims

1. A composition, comprising:
(i) a collection of fibers,
(ii) a dehydrated mixture of a monosaccharide and an ammonium salt of a hydroxy-monocarboxylic acid disposed on the collection of fibers, wherein the collection of fibers with the dehydrated mixture of a monosaccharide and an ammonium salt of a hydroxy-monocarboxylic acid disposed thereon is contained within a package.

2. The composition of claim 1, wherein the fibers are selected from the group consisting of mineral fibers, aramid fibers, ceramic fibers, metal fibers, carbon fibers, polyimide fibers, polyester fibers, rayon fibers, glass fibers, and cellulosic fibers.

3. The composition of claim 2, wherein the cellulosic fibers are present in a cellulosic substrate selected from the group consisting of wood shavings, sawdust, wood pulp, and ground wood.

4. The composition of claim 2, wherein the composition is uncured wood fiber board.

5. The composition of claim 1 wherein the monosaccharide is selected from the group consisting of dextrose, fructose, xylose, dihydroxyacetone, and mixtures thereof.

6. A method of binding a collection of matter, comprising: preparing an aqueous solution consisting essentially of a carbohydrate, a hydroxy-monocarboxylic acid, and ammonia in proportions such that the pH is in the range from 7 to 10;
disposing the aqueous solution onto a collection of matter;
volatilizing the water to form a dehydrated reactive mixture disposed upon the collection of matter, and
curing the dehydrated reactive mixture.

7. The method of claim 6, wherein the collection of matter consists essentially of glass fibers present in the range from 80% to 99% by weight.

8. The method of claim 6, wherein the aqueous solution further consists of a corrosion inhibitor and a silicon-containing compound.

9. A method of fabricating fiberglass insulation, comprising:
placing an uncured binder composition onto a collection of glass fibers, wherein the uncured binder composition includes a carbohydrate, a hydroxy-monocarboxylic acid, and ammonia in proportions such that the pH is in the range from 7 to 10;
volatizing water from the uncured binder composition; and
packaging the collection of glass fibers and uncured binder composition.

10. The method of claim 9 wherein, the carbohydrate is a monosaccharide and the hydroxy-monocarboxylic acid is a monomeric hydroxy- monocarboxylic acid.

11. A packaged fiberglass insulation product, comprising a collection of glass fibers and a thermoset binder composition, wherein
(i) the thermoset binder composition is the reaction product of a dehydrated reactive mixture,
(ii) the dehydrated reactive mixture is the result of dehydrating a reactive solution,
(iii) the reactive solution comprises an ammonium salt of a hydroxy-monocarboxylic acid, a carbohydrate, and ammonia mixed in proportions such that pH of the solution is from 7 to 10, and
(iv) the glass fibers are present in the range from 80% to 99% by weight.

12. The product of claim 11, wherein the carbohydrate is selected from the group consisting of dextrose, fructose, xylose, dihydroxyacetone, and mixtures thereof.

13. The composition of claim 1 or claim 12, wherein the hydroxy- monocarboxylic acid is selected from the group consisting of an unsaturated aliphatic hydroxy-monocarboxylic acid, a saturated aliphatic hydroxy-monocarboxylic acid, an aromatic hydroxy-monocarboxylic acid, an unsaturated cyclic hydroxy-monocarboxylic acid, a saturated cyclic hydroxy-monocarboxylic acid, a monohydroxy-monocarboxylic acid, anhydrides thereof, and mixtures thereof.

14. The composition of claim 1 or claim 11, wherein the hydroxy- monocarboxylic acid is selected from the group consisting of glycolic acid, gluconic acid, lactic acid, glyceric acid, methyl-lactic acid, and mixtures thereof.

15. The composition of claim 1 or claim 11 further comprising a component selected from the group consisting of trimethylolpropane, glycerol, pentaerythritol, sorbitol, 1,5-pentanediol, 1,6-hexanediol, polyTHF₆₅₀, polyTHF₂₅₀, textrion whey, polyvinyl alcohol, partially hydrolyzed polyvinyl acetate, fully hydrolyzed polyvinyl acetate, and mixtures thereof.

## Patentansprüche

1. Zusammensetzung, umfassend:
(i) eine Ansammlung von Fasern,
(ii) ein dehydriertes Gemisch eines Monosaccharids und eines Ammoniumsalzes von einer Hydroxymonocarbonsäure, aufgebracht auf die Ansammlung an Fasern, wobei die Ansammlung an Fasern mit dem darauf aufgebrachten dehydrierten Gemisch eines Monosaccharids und eines Ammoniumsalzes von einer Hydroxymonocarbonsäure in einer Verpackung enthalten ist.

2. Zusammensetzung nach Anspruch 1, wobei die Fasern ausgewählt sind aus der Gruppe, bestehend aus Mineralfasern, Aramidfasern, Keramikfasern, Metallfasern, Kohlenstofffasern, Polyimidfasern, Polyesterfasern, Viskosefasern, Glasfasern, und Cellulosefasern.

3. Zusammensetzung nach Anspruch 2, wobei die Cellulosefasern in einem Cellulosesubstrat vorliegen, ausgewählt aus der Gruppe, bestehend aus Holzspänen, Sägemehl, Holzpulpe bzw. Zellstoff und gemahlenem Holz.

4. Zusammensetzung nach Anspruch 2, wobei die Zusammensetzung eine ungehärtete Holzfaserplatte ist.

5. Zusammensetzung nach Anspruch 1, wobei das Monosaccharid ausgewählt ist aus der Gruppe, bestehend aus Dextrose, Fruktose, Xylose, Dihydroxyaceton und Gemischen davon.

6. Verfahren zum Binden einer Ansammlung von Material, umfassend:
Zubereiten einer wässrigen Lösung, welche im wesentlichen aus einem Kohlenhydrat, einer Hydroxymonocarbonsäure und Ammoniak in solchen Mengenverhältnissen besteht, dass der pH im Bereich von 7 bis 10 liegt,
Aufbringen der wässrigen Lösung auf eine Ansammlung von Material,
Verflüchtigen des Wassers, um ein dehydriertes reaktives Gemisch zu bilden, welches auf die Ansammlung an Material aufgebracht ist, und
Härten des dehydrierten reaktiven Gemischs.

7. Verfahren nach Anspruch 6, wobei die Ansammlung an Material im wesentlichen aus Glasfasern besteht, welche im Bereich von 80 bis 99 Gew.-% vorliegen.

8. Verfahren nach Anspruch 6, wobei die wässrige Lösung weiter aus einem Korrosionshemmmittel und einer Silizium-enthaltenden Verbindung besteht.

9. Verfahren zur Herstellung von Fiberglasisolierung, umfassend:
Anordnen einer ungehärteten Bindemittelzusammensetzung auf einer Ansammlung aus Glasfasern, wobei die ungehärtete Bindemittelzusammensetzung ein Kohlehydrat, eine Hydroxymonocarbonsäure und Ammoniak in solchen Mengenverhältnissen einschließt, dass der pH im Bereich von 7 bis 10 liegt,
Verflüchtigen von Wasser aus der ungehärteten Bindemittelzusammensetzung, und
Verpacken der Ansammlung von Glasfasern und ungehärteten Bindemittelzusammensetzung.

10. Verfahren nach Anspruch 9, wobei das Kohlehydrat ein Monosaccharid ist, und die Hydroxymonocarbonsäure eine monomere Hydroxymonocarbonsäure ist.

11. Verpacktes Fiberglasisolationsprodukt, umfassend eine Ansammlung an Glasfasern und eine wärmegehärtete Bindemittelzusammensetzung, wobei
(i) die wärmegehärtete Bindemittelzusammensetzung das Reaktionsprodukt eines dehydrierten reaktiven Gemischs ist,
(ii) das dehydrierte reaktive Gemisch das Ergebnis des Dehydrierens einer reaktiven Lösung ist,
(iii) die reaktive Lösung ein Ammoniumsalz einer Hydroxymonocarbonsäure, ein Kohlehydrat und Ammoniak umfasst, gemischt in solchen Mengenverhältnissen, dass der pH der Lösung 7 bis 10 beträgt, und
(iv) die Glasfasern im Bereich von 80 bis 99 Gew.-% vorliegen.

12. Produkt nach Anspruch 11, wobei das Kohlehydrat ausgewählt ist aus der Gruppe, bestehend aus Dextrose, Fructose, Xylose, Dihydroxyaceton und Gemischen davon.

13. Zusammensetzung nach Anspruch 1 oder Anspruch 12, wobei die Hydroxymonocarbonsäure ausgewählt ist aus der Gruppe, bestehend aus einer ungesättigten aliphatischen Hydroxymonocarbonsäure, einer gesättigten aliphatischen Hydroxymonocarbonsäure, einer aromatischen Hydroxymonocarbonsäure, einer ungesättigten cyclischen Hydroxymonocarbonsäure, einer gesättigten cyclischen Hydroxymonocarbonsäure, einer Monohydroxymonocarbonsäure, Anhydriden davon und Gemischen davon.

14. Zusammensetzung nach Anspruch 1 oder Anspruch 11, wobei die Hydroxymonocarbonsäure ausgewählt ist aus der Gruppe, bestehend aus Glycolsäure, Gluconsäure, Milchsäure, Glycerinsäure, Methyl-Milchsäure und Gemischen davon.

15. Zusammensetzung nach Anspruch 1 oder Anspruch 11, weiter umfassend eine Komponente, ausgewählt aus der Gruppe, bestehend aus Trimethylolpropan, Glycerin, Pentaerythritol, Sorbitol, 1,5-Pentandiol, 1,6-Hexandiol, PolyTHF₆₅₀, PolyTHF₂₅₀, Textrion-Molke, Polyvinylalkohol, teilweise hydrolysiertes Polyvinylacetat, vollständig hydrolisiertes Polyvinylacetat und Gemischen davon.

## Revendications

1. Une composition, comprenant :
(i) une collection de fibres,
(ii) un mélange déshydraté d'un monosaccharide et d'un sel d'ammonium d'un acide hydroxy-monocarboxylique disposé sur la collection de fibres, où la collection de fibres avec le mélange déshydraté d'un monosaccharide et d'un sel d'ammonium d'un acide hydroxy-monocarboxylique disposé dessus est contenue dans un emballage.

2. La composition selon la revendication 1, où les fibres sont sélectionnées parmi le groupe consistant en des fibres minérales, des fibres aramides, des fibres céramiques, des fibres métalliques, des fibres de carbone, des fibres de polyimide, des fibres de polyester, des fibres de rayonne, des fibres de verre, et des fibres cellulosiques.

3. La composition selon la revendication 2, où les fibres cellulosiques sont présentes dans un substrat cellulosique sélectionné parmi le groupe consistant en des copeaux de bois, de la sciure de bois, de la pâte de bois, et de bois broyé.

4. La composition selon la revendication 2, où la composition est des panneaux en fibre de bois non durcis.

5. La composition selon la revendication 1, où le monosaccharide est sélectionné parmi le groupe consistant en du dextrose, du fructose, du xylose, du dihydroxyacétone, et leurs mélanges.

6. Une méthode pour lier une collection de matière comprenant : la préparation d'une solution aqueuse consistant essentiellement en un glucide, un acide hydroxy-monocarboxylique et d'ammoniac dans des proportions telles que le pH soit compris dans l'intervalle de 7 à 10. ;
la disposition de la solution aqueuse sur la collection de matières ;
la volatilisation de l'eau pour former un mélange réactif déshydraté disposé sur la collection de matière, et
le durcissement du mélange réactif déshydraté.

7. La méthode selon la revendication 6, où la collection de matières consiste essentiellement en des fibres de verre présentes dans l'intervalle de 80% à 99% en poids.

8. La méthode selon la revendication 6, où la solution aqueuse consiste en outre en un inhibiteur de corrosion et un composé contenant du silicium.

9. Une méthode pour fabriquer de l'isolation en fibre de verre comprenant les étapes suivantes :
placer une composition de liant non durci sur une collection de fibres de verre, où la composition du liant non durci inclut un glucide, un acide hydroxy-monocarboxylique, et de l'ammoniac dans des proportions telles que le pH soit compris dans l'intervalle de 7 à 10 ;
volatiliser l'eau de la composition de liant non durci ; et
emballer la collection de fibres de verre et la composition de de liant non durci.

10. La méthode selon la revendication 9, où le glucide est un monosaccharide et l'acide hydroxy-monocarboxylique est un monomère d'acide hydroxy-monocarboxylique.

11. Un produit d'isolation en fibre de verre emballé, comprenant une collection de fibre de verre et une composition de liant thermodurci, où
(i) la composition de liant thermodurci est le produit de réaction d'un mélange réactif déshydraté,
(ii) le mélange réactif déshydraté est le résultat de la déshydratation d'une solution réactive,
(iii) la solution réactive comprend un sel d'ammonium d'un acide hydroxy-monocarboxylique, un glucide, et de l'ammoniac mélangés dans des proportions telles que le pH de la solution soit compris entre 7 et 10, et
(iv) les fibres de verre sont présentes dans l'intervalle compris entre 80% et 99% en poids.

12. Le produit de la revendication 11, où le glucide est sélectionné parmi le groupe consistant en du dextrose, du fructose, du xylose, du dihydroxyacétone, et leurs mélanges.

13. La composition selon la revendication 1 ou la revendication 12, où l'acide hydroxy-monocarboxylique est sélectionné parmi le groupe consistant en un acide hydroxy-monocarboxylique aliphatique insaturé, un acide hydroxy-monocarboxylique aliphatique saturé, un acide hydroxy-monocarboxylique aromatique, un acide hydroxy-monocarboxylique cyclique insaturé, un acide hydroxy-monocarboxylique cyclique saturé, un acide monohydroxy-monocarboxylique, leurs anhydrides, et leurs mélanges.

14. La composition selon la revendication 1 ou la revendication 11, où l'acide hydroxy-monocarboxylique est sélectionné parmi le groupe consistant en de l'acide glycolique, de l'acide gluconique, de l'acide lactique, de l'acide glycérique, de l'acide méthyl-lactique, et leurs mélanges.

15. La composition selon la revendication 1 ou la revendication 11 comprenant en outre un composant sélectionné parmi le groupe consistant en du triméthylolpropane, du glycérol, du pentaérythritol, du sorbitol, du pentane-1,5-diol, de l'hexane-1,6-diol, du polyTHF₆₅₀, du polyTHF₂₅₀, du textrion de petit-lait, de l'alcool polyvinylique, de l'acétate de polyvinyle partiellement hydrolysé, de l'acétate de polyvinyle complètement hydrolysé, et leurs mélanges.
